(19) Europäisches Patentamt
European Patent Office
Office européen des brevets

(11) EP 1 309 141 B1

(12) **EUROPEAN PATENT SPECIFICATION**

(45) Date of publication and mention of the grant of the patent:
**14.11.2012 Bulletin 2012/46**

(51) Int Cl.:
***H04Q 11/00*** *(2006.01)* ***H04L 12/56*** *(2006.01)*

(21) Application number: **02292726.3**

(22) Date of filing: **31.10.2002**

(54) **Node, program product and network for optical dynamic burst switching**

Knoten, Programma-Produkt und Netzwerk zum Optischen dynamischen Burst-Vermittlung

Noeud, produit de programme et réseau de commutation dynamique de rafales optique

(84) Designated Contracting States:
**DE FR GB**

(30) Priority: **02.11.2001 JP 2001337593**
**02.11.2001 JP 2001337914**

(43) Date of publication of application:
**07.05.2003 Bulletin 2003/19**

(73) Proprietor: **NIPPON TELEGRAPH AND TELEPHONE CORPORATION**
**Tokyo (JP)**

(72) Inventors:
- **Shiomoto, Kohei**
  **Musashino-shi, Tokyo (JP)**
- **Yamanaka, Naoaki**
  **Musashino-shi, Tokyo (JP)**
- **Oki, Eiji**
  **Musashino-shi, Tokyo (JP)**

(74) Representative: **Brykman, Georges et al**
**BREVALEX**
**95 rue d'Amsterdam**
**75378 Paris Cedex 8 (FR)**

(56) References cited:
**US-A- 5 970 067**

- **JENNY J HE ET AL: "Flow Routing and its Performance Analysis in Optical IP Networks", PHOTONIC NETWORK COMMUNICATIONS, KLUWER ACADEMIC PUBLISHERS, BO, vol. 3, no. 1-2, 1 January 2001 (2001-01-01), pages 49-62, XP019214488, ISSN: 1572-8188, DOI: DOI: 10.1023/A:1011483610894**
- **QIAO C ET AL: "CHOICES, FEATURES AND ISSUES IN OPTICAL BURST SWITCHING", OPTICAL NETWORKS MAGAZINE, SPIE, BELLINGHAM, WA, US, vol. 1, no. 2, 1 April 2000 (2000-04-01), pages 36-44, XP000969814, ISSN: 1388-6916**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

BACKGROUND OF THE INVENTION

Field of the Invention

The present invention is used in optical communications, and relates to techniques for transferring optical burst data in a communication network used in transferring burst data using optical wavelengths as communication media.

Description of the Related Art

In conventional transferring of IP (internet protocol) data in optical communications, a plurality of routers are provided between the start point and the end point, and the data is transferred via these routers. The routers determine the next routers which the data is to be transferred to by referring to IP addresses, appended to the packets.

In an optical communication network of this type, when reading the header information of the packet, the optical signal is temporarily converted to an electrical signal. The router determines the next router which the data is to be transferred to in accordance with the IP address, read in this manner.

When transferring data in bursts, it is inefficient to read each of the IP addresses of the packets one by one; therefore, a cut through path between the start point and end point is established in advance, and, since the IP headers need not be read in segments of this cut through path, the optical signal can be transferred at high speed.

In this type of conventional optical communication, when transferring burst data by using the cut through path, the cut through path must be established in advance. To establish the cut through path in advance, a request to establish the cut through path is sent to each of the routers from the start point to the end point, the preliminary establishing of the cut through path being completed when the routers have complied with this request.

The procedure for establishing the cut through path at the routers comprises (1) converting the header information of the optical IP packet which has arrived to an electrical signal, and (2) determining whether information corresponding to a request to establish the cut through path is contained in the header information. When the information contains an establishment request, a wavelength is selected for establishing the cut through path, and the cut through path is established when a wavelength has been selected. Then, since there is no longer any need to read the header information of the IP packet on the wavelength which the cut through path has been established at, the establishment is altered in order to differentiate this wavelength from other wavelengths, where the IP packet is transferred in the form of an optical signal.

However, this type of establishment procedure takes considerable time. For example, let us assume that 2t seconds are needed to establish the cut through path. When it takes 3t seconds to transfer burst data using this cut through path, a total of 5t seconds is required to establish the cut through path and transfer the burst data. In this example, nearly half of the total time of 5t seconds to transfer the burst data is taken up by establishing the cut through path. If the time taken to establish the cut through path beforehand could be used for transferring data, the transferring efficiency would be greatly increased.

Although a cut through path is most appropriate for transferring burst data using a wavelength path, the quality of the optical signal deteriorates during transmission due to various factors. Consequently, there are inevitable limitations on the length of a cut through path which signals can be transmitted along without 3R processing.

Conventionally, the places to be 3R processed are determined by calculation. This calculation has two problems. The first is that deterioration in signal quality has a variety of causes, so that a huge amount of data must be processed in order to consider the great number of causes in the calculation. This increases the time needed to complete the calculation. The second problem is that the result obtained by such a calculation may not be highly accurate, necessitating safety measures such as providing extra places for 3R processing; this is not an efficient use of network resources.

Conventionally, when a signaling packet has reached a node where there are difficulties in obtaining resources, the node notifies the transmission side node of the difficulty in obtaining resources, and the transmission side node either retries to establish the path or gives up.

Conventionally, one path, which the transmission side node transmits the signaling packet along, is determined by a predetermined policy. For example, based on a policy of "use the shortest path", the signaling packet is transmitted along the shortest path between the transmission side node and the reception side node. Then, the availability of resources is determined at each of the relay nodes on the path.

In this way, the availability of resources is tested on a single path determined by a predetermined policy, and, when resources are found to be difficult to obtain, the transmission side node retries along the same path.

SUMMARY OF THE INVENTION

The present invention has been realized based on the background described above and as e.g. disclosed in 'Flow Routing and its Performance Analysis in Optical IP Networks', Photonic Network Communications Vol. 3 Numbers 1-2, pages 49-62, 2001, and aims to provide an optical communication network, a program, and a recording medium which can transfer burst data more efficiently by saving time in establishing the cut through path.

It is another object of this invention to provide a node, an optical path network, a program, and a recording medium, which can reduce the procedures and time needed to set positions for 3R processing, identify accurate positions, and use network resources effectively.

It is another object of this invention to provide a network, a node, a program, and a recording medium, which can increase the success rate of the path establishment, and establish paths speedily while using resources effectively, by securing resources based on a policy which uses a plurality of paths as candidates, in the expectation that one of the paths will be successful in obtaining resources.

This invention is characterized in that the path for establishing the cut through path is calculated in advance, and, when the burst data has arrived, the cut through path for transferring the burst data is actually established and the data is transferred speedily.

That is, this invention comprises a transferring function for transferring data, a receiving function for receiving data, and a unit for establishing and releasing the cut through path to a node of the next stage.

The unit for establishing and releasing the cut through path of this invention comprises a unit which calculates in advance establishment for cut through paths for a plurality of nodes in the next stage, a detecting unit which detects the arrival of the leading packet of burst data, and a unit which actually establishes a cut through path along a path to a node of the next stage which corresponds to the IP address of the leading packet detected by the detecting unit from among the plurality of cut through path establishment paths calculated in advance in accordance with the IP address.

By calculating the paths for establishing the cut through path in advance in this way, the time from the arrival of the burst data to the actual establishment of the cut through path can be reduced, enabling the burst data to be effectively transferred.

Preferably, the invention comprises a unit which measures the amount of past traffic which was transferred to a plurality of next stages, the unit which calculates the establishment path calculating in advance the establishment path of a cut through path to a transferring destination node which exceeds a predetermined amount of traffic, in accordance with the measurement obtained by the measuring unit.

This makes it possible to determine the usefulness of calculating the establishment path of cut through paths in advance, whereby paths having a low usefulness for calculating the establishment path in advance can be used effectively as paths for normal IP transferring.

The unit for calculating the establishment path may comprise a unit which calculates in advance at least one establishment path of a cut through path to a transferring destination node which exceeds a predetermined amount of traffic, the number of establishment paths calculated being proportional to the amount of traffic, in accordance with the measurement obtained by the measuring unit.

Consequently, on paths having a large amount of traffic, burst data can be transferred along a plurality of cut through paths, enabling the burst data to be transferred efficiently.

Preferably, the actual establishing unit comprises a unit which establishes cut through paths to a plurality of nodes, and the node further comprises a unit which disperses and transfers a plurality of packets forming a series of burst data along the plurality of cut through paths. Preferably, sequence numbers prior to dispersal are appended to each of the dispersed packets.

Consequently, large-capacity burst data can be divided into a series of burst data, and transferred in parallel by using a plurality of cut through paths. The packet sequence can be ensured by appending a sequence number to each packet.

Preferably, the unit for calculating the establishment paths comprises a unit which calculates in advance the establishment paths of cut through paths having different link costs for a plurality of nodes, and the actual establishing unit comprises a unit which actually establishes a cut through path on an establishment path having a link cost corresponding to the QoS (Quality of Service) class of the burst data arriving at the node, from among the plurality of cut through paths having different link costs. The link cost is the transmission load of the link, and is defined by physical or logical parameters.

Consequently, it is possible to make a selection from cut through paths having different link costs corresponding to different attributes based on QoS class, hop number, delay time, and such like.

Preferably, the unit which calculates the establishment paths comprises a unit which calculates in advance establishment paths of cut through paths for a plurality of nodes in the next stage. An establishment path for the cut through path used in transferring the burst data is allocated in advance, in accordance with the burst length of arriving burst data. The actual establishing unit actually establishes a cut through path along the establishment path allocated to the burst length from among the plurality of establishment paths for cut through paths, in accordance with the burst length of the arriving burst data.

Consequently, the node of this invention enables the load to be dispersed, and, when used in a transmission side edge node or a relay node and the like, in a constitution for buffering the burst data, by fixing the length of the burst data transferred on each cut through path, greater buffer efficiency can be achieved than when the length is not fixed.

Alternatively, this invention is characterized in that the unit for establishing and releasing the cut through path comprises a unit which calculates establishment paths of cut through paths to a plurality of nodes, and a detecting unit which detects the arrival of a leading packet of the burst data. The actual establishing unit actually establishes different two cut through paths as the establishment path which corresponds to the IP address of the leading packet, detected by the detecting unit, from among the plurality of establishment paths for cut through paths calculated in advance in accordance with the IP address. One of the cut through paths is a working path and the other is a protection path. This makes it possible to transfer burst data with high reliability.

Preferably, a unit is provided to transfer identical burst data on the working path and the protection path, so that the burst data can be transferred normally when either of the paths is damaged.

In an alternative arrangement, the unit for establishing and releasing the cut through path comprises a unit which calculates establishment paths of cut through paths to a plurality of nodes. This invention comprises a detecting unit which detects the arrival of a leading packet of the burst data; an actual establishing unit which actually establishes as a working path the cut through path of the establishment path which corresponds to the IP address of the leading packet detected by the detecting unit from among the plurality of establishment paths for cut through paths calculated in advance in accordance with the IP address; a selecting unit which selects an establishment path of a protection cut through path having a different path to that of the working path from among the plurality of establishment paths for cut through paths calculated in advance; and an actual establishing unit which actually establishes a protection cut through path on the protection cut through path establishment path, selected by the selecting unit, when the working cut through path is damaged. This enables burst data to be transferred with high reliability.

Preferably, by providing a unit which transfers burst data along the working path when there is no detected damage to the path which the working path has been established on, and a unit which transfers burst data on the protection path when damage is detected on the path which the working path has been established on, the burst data can be transferred normally by using the protection path when the working path has become damaged.

In this case, sequence numbers are appended to packets forming the burst data. A notifying unit notifies a node in the preceding stage via the protection path of the final sequence number of burst data transferred along the working path when the burst data has been lost. This node comprises a unit which temporarily accumulates burst data, and a unit which refers to the final sequence number, notified from the node of the next stage prior to transferring the burst data accumulated by the temporary accumulating unit along the protection path, and deems a packet, which the next sequence number after the final sequence number is appended to, as the leading packet of burst data to be transferred along the protection path. Consequently, there is no loss of packets or jumbling of the sequence when switching from the working path to the protection path.

This invention is characterized in that the cut through path is established in advance irrespective of whether burst data are being transferred, and, when burst data has arrived, a cut through path for transferring the burst data is speedily selected and the burst data is transferred.

That is, the node of this invention is an optical communication network having a data transferring function of transferring data and a data receiving function of receiving data, and comprises a unit which establishes and releases cut through paths to nodes in the next stage.

In the node of this invention, the establishing and releasing unit comprises a unit which establishes in advance cut through paths to a plurality of nodes, irrespective of whether burst data are to be transferred along the cut through paths; a detecting unit is provided which detects the arrival of a leading packet of burst data; and a selecting unit is provided which selects a cut through path on an establishment path to the reception side edge node corresponding to the IP address of the leading packet, detected by the detecting unit, from among the plurality of cut through paths which were established in advance.

Consequently, cut through paths which have been established half-securely are used to reduce the time taken in establishing the cut through path, thereby increasing the efficiency of burst data transferring.

As described above, according to the node of this invention, the time taken to establish a cut through path can be reduced, enabling the burst data to be transferred more efficiently.

Furthermore, this invention provides a program which is installed in an information processing device, allowing the information processing device to realize a function of establishing and releasing cut through paths to nodes in the next stage in an optical communication network. This function comprises calculating in advance cut through path establishment paths to a plurality of nodes, detecting the arrival of a leading packet of burst data, and actually establishing a cut through path along a path to a node of the next stage which corresponds to the IP address of the leading packet detected by the detecting function from among the plurality of cut through path establishment paths calculated in advance in accordance with the IP address.

Consequently, an information processing device, such as a computer device, can transfer burst data more efficiently by reducing the time taken to establish the cut through path.

The node of this invention comprises a unit which, prior to establishing an optical path, transmits an optical packet for test along a planned establishment path for the optical path; a unit which receives the optical packet for test and determines its signal quality; a unit which notifies a node in a preceding stage when the determining unit has determined that the signal quality has deteriorated; and a unit which receives the notification, and performs 3R processing of optical packets which subsequently travel along the path.

That is, according to this invention, on a path for transferring data comprising optical signals, such as a cut through path using a wavelength path, there is no need to calculate which position 3R processing must be carried out at, thereby reducing the time and procedures required in establishing the cut through path. Furthermore, since the position for 3R processing is determined by using an optical packet for test experimentally, these positions are precise, making it unnecessary to provide an extra 3R position, enabling the network resources to be used effectively.

As described above, according to this invention, the time and procedures required to set a 3R processing position can be reduced, the position can be precisely identified, and network resources can be used effectively.

BRIEF DESCRIPTION OF THE DRAWINGS

FIG. 1 is a conceptual diagram showing an optical communication network according to an embodiment of this invention;
FIG. 2 is a block diagram showing a burst data detecting section and a cut through path establishing and releasing section according to an embodiment of this invention;
FIG. 3 is a conceptual diagram showing an optical communication network where a cut through path has been established;
FIG. 4 is a diagram showing a cut through path establishment table according to first to seventh embodiments of this invention;
FIG. 5 is a diagram showing how a series of burst data is divided;
FIG. 6 is a diagram showing how a series of burst data is transferred using a plurality of cut through paths according to the first to seventh embodiments of this invention;
FIG. 7 is a diagram showing a plurality of cut through paths having different link costs;
FIG. 8 is a flowchart showing procedures of selecting a cut through path according to the second and eighth embodiments;
FIG. 9 is a diagram showing a plurality of cut through paths established at different burst lengths;
FIG. 10 is a flowchart showing procedures of selecting a cut through path according to the second and eighth embodiments;
FIGS. 11A and 11B are diagrams showing advantages of the third and ninth embodiments;
FIG. 12 is a diagram showing an optical communication network in which working and protection cut through paths have been established;
FIG. 13 is a diagram showing an optical communication network in which working and protection cut through paths have been established;
FIG. 14 is a diagram showing an operation immediately after a working cut through path has become damaged;
FIG. 15 is a diagram showing an operation of retransmitting burst data using a protection path;
FIG. 16 is a diagram showing the constitution of an optical path network according to a thirteenth embodiment;
FIG. 17 is a block diagram showing a node according to the thirteenth embodiment;
FIG. 18 is a diagram showing a 3R processing constitution according to a fourteenth embodiment;
FIG. 19 is a conceptual diagram showing a network according to this embodiment;
FIG. 20 is a block diagram showing a path establishing section according to this embodiment;
FIG. 21 is a block diagram showing a transmitting side node according to this embodiment;
FIG. 22 is a flowchart showing the establishment success rate calculation flow according to a sixteenth embodiment; and
FIG. 23 is a flowchart showing the establishment success rate calculation flow according to a seventeenth embodiment.

DETAILED DESCRIPTION OF THE PREFERRED EMBODIMENTS

Embodiments of the present invention will be explained with reference to the drawings.

In this application, "node on the transmission side" (transmission side edge node) and "node on the reception side" (reception side edge node) refer respectively to a node on the side which transmits a request to establish a path prior to transferring the data, and a node which becomes the final destination of the request. When transferring data after establishing the path, either node (optical dynamic burst switch) of the node on the transmission side and the node on the receive side can become the data transmission source and data receive destination. Furthermore, the path which has been established may be unidirectional or bi-directional.

The node of this invention can be used as any one of a transmission side node, a reception side node, and a relay node, the functions of the following embodiments being appended to the node in accordance with its use.

Embodiment 1

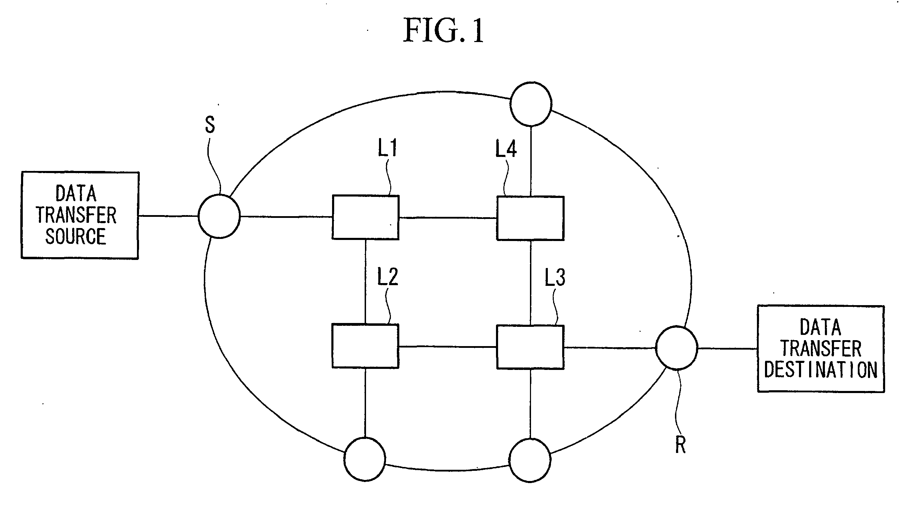

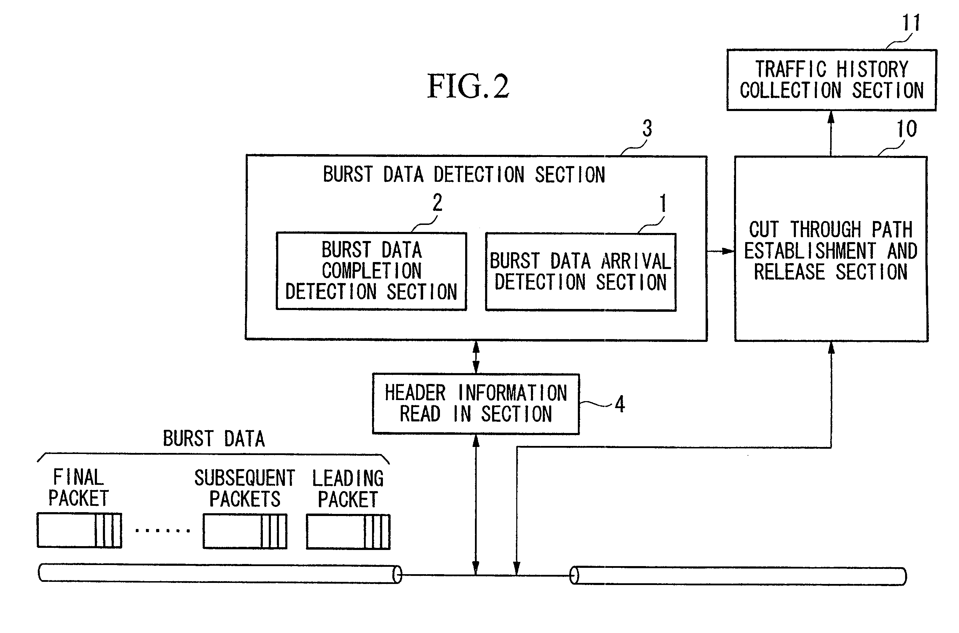

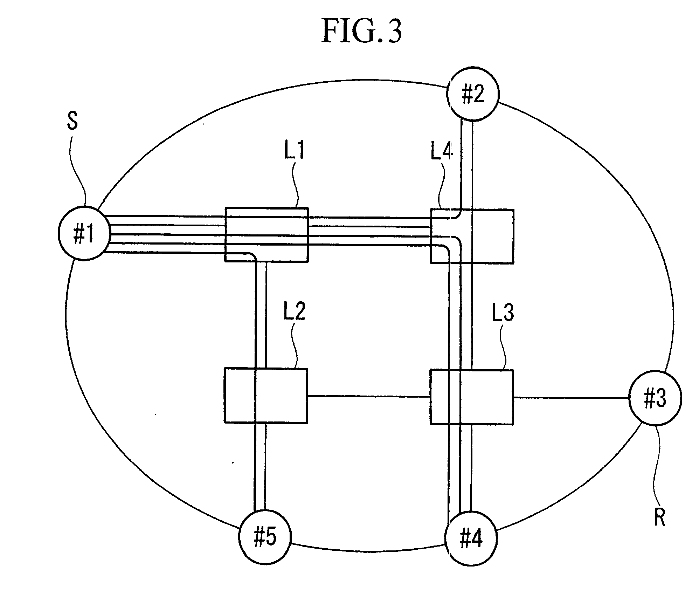

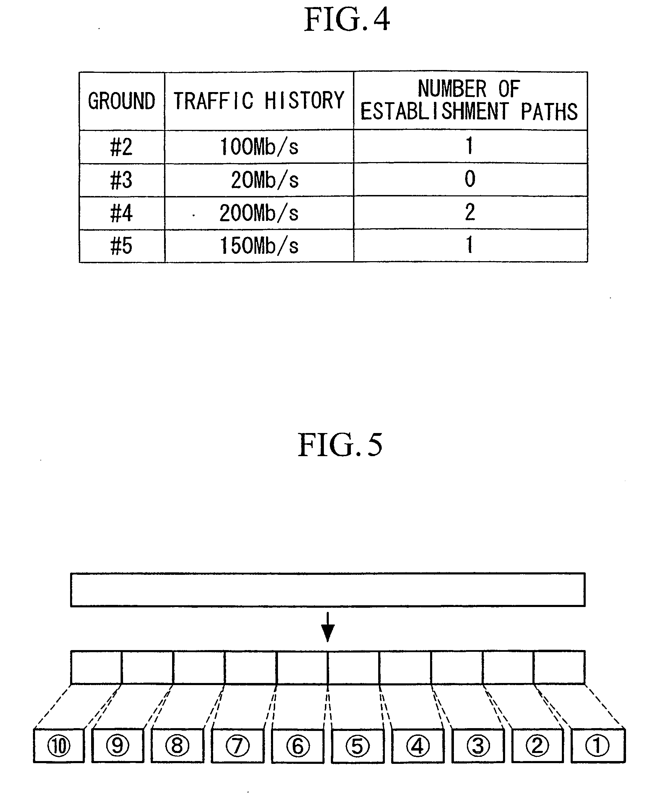

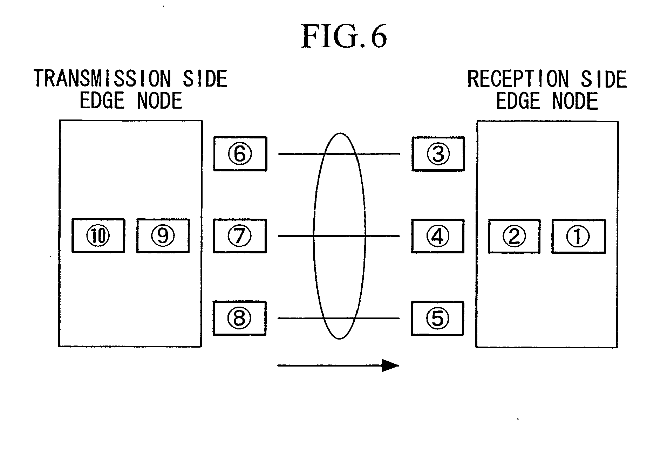

A first embodiment of this invention will be explained with reference to FIGS. 1 to 6. FIG. 1 is a conceptual diagram showing an optical communication network according to an embodiment of this invention. FIG. 2 is a block diagram showing a burst data detection section and a cut through path establishment and release section according to an embodiment of this invention. FIG. 3 is a conceptual diagram showing an optical communication network where a cut through path has been established. FIG. 4 is a diagram showing a cut through path establishing table according to the first embodiment of this invention. FIG. 5 is a diagram showing how a series of burst data is divided. FIG. 6 is a diagram showing how a series of burst data are transferred using a plurality of cut through paths according to the first embodiment of this invention.

In this embodiment, the transmission side edge node S and the reception side edge node R are distinguished from each other in order to simplify the explanation, but in reality, the functions of the transmission side and reception side are appended to both edge nodes, and communications can be transmitted in both directions.

As shown in FIG. 1, this invention provides an optical communication network comprising a transmission side edge node S which accommodates a data transfer source, a reception side edge node R which accommodates a data transfer destination, and relay nodes L1 to L4, provided between the transmission side edge node S and the reception side edge node R. In this embodiment, the function for establishing and releasing the cut through path corresponds to a cut through path establishment and release section 10, shown in FIG. 2, and may be appended to each of the transmission side edge node S, the relay nodes L1 to L4, and the reception side edge node R; alternatively, the function may be appended to a single device, or dispersed across a plurality of devices for managing the establishment and release of the cut through path in an optical communication network outside the nodes. The function is realized by using conventional technology, and will not be explained in detail.

As shown in FIG. 2, this invention has the following characteristics. The cut through path establishment and release section 10 calculates establishing paths of a plurality of cut through paths from one transmission side edge node S to a plurality of reception side edge nodes R in advance. The burst data detection section 3 comprises a burst data arrival detection section 1 which detects the arrival of the leading packet of burst data to the transmission side edge node S. From among the establishing paths of the plurality of cut through paths, calculated in advance in accordance with the IP address of the leading packet, detected by the burst data arrival detection section 1, the cut through path establishment and release section 10 actually establishes a cut through path to the reception side edge node R along the establishing path which corresponds to the IP address.

The header information read in section 4 reads the header information of the IP packet, and notifies the burst data arrival detection section 1. The burst data arrival detection section 1 analyzes the header information and thereby identifies the IP address. When a burst data completion detection section detects that there have been no communications on the cut through path for a predetermined period of time, it determines that the burst data has ended, and the cut through path established for transferring the burst data is released.

A traffic history collection section 11 measures the amounts of past traffic transferred from the transmission side edge node S to the plurality of reception side edge nodes R, and the cut through path establishment and release section 10 calculates in advance a path to the reception side edge nodes R which exceed a predetermined amount of traffic, in accordance with the measurement obtained by the traffic history collection section 11. As shown in FIG. 4, the histories collected by the traffic history collection section 11 are stored in a cut through path establishing table for each of the reception side edge nodes at ground (#2, #3, #4, and #5).

At this time, the cut through path establishment and release section 10 calculates in advance more than one establishing path for a cut through path from the transmission side edge node S to the reception side edge node R which exceeds the predetermined amount of traffic, the number of establishing paths calculated being proportional to the amount of traffic, in accordance with the measurement obtained by the traffic history collection section 11. In the example shown in FIG. 4, one cut through path establishing path is calculated for a traffic history of between 100 Mb/s and 200 Mb/s, and two cut through paths are calculated for a traffic history of 200 Mb/s. Where the traffic history is less than 100 Mb/s, no establishing path is calculated.

Furthermore, when the cut through path establishment and release section 10 has actually established a plurality of cut through paths from one transmission side edge node S to one reception side edge node R, the transmission side edge node S transfers a plurality of packets forming a series of burst data by dispersing them over the plurality of cut through paths. In this case, sequence numbers prior to dispersal are appended to the dispersed packets.

As shown in FIG. 5, the series of burst data is divided, and, as shown in FIG. 6, transferred by using the plurality of cut through paths; this avoids a concentration of load on a single cut through path and enables the cut through paths to be used effectively. In the example of FIG. 6, sequence numbers are appended to burst data which has been divided into ten equal sections, and the burst data are transferred in sequence (starting with the lowest number) from the transmission side edge node S along three cut through paths by using a round robin.

Due to differences in the delay characteristics of the cut through paths, the transmission sequence from the transmission side edge node may not match the receiving sequence at the reception side edge node; consequently, the sequence is adjusted at the reception side edge node based on the sequence numbers appended to the divided burst data to reproduce the original series of burst data.

Embodiment 2

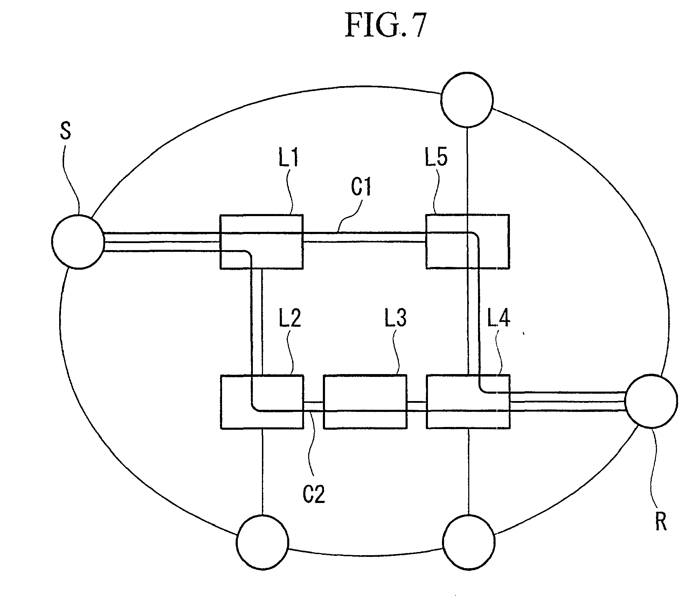

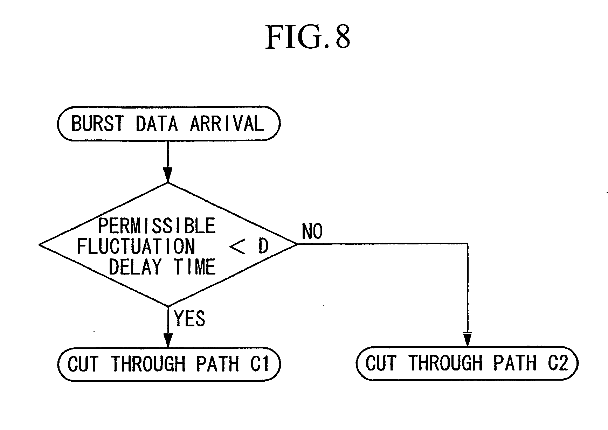

A second embodiment of this invention will be explained based on FIGS. 7 and 8. FIG. 7 is a diagram showing a plurality of cut through paths having different link costs. FIG. 8 is a flowchart showing procedures of selecting a cut through path according to the second embodiment. As shown in FIG. 7, in the second embodiment, the cut through path establishment and release section 10 calculates in advance the establishing paths of cut through paths having different link costs from one transmission side edge node S to one reception side edge node R, and a cut through path is actually established on the establishing path having a link cost corresponding to the QoS (Quality of Service) class of the arriving burst data, from among the plurality of cut through paths having different link costs.

The example of FIG. 7 illustrates two cut through paths: a first cut through path C1, for which an establishing path of transmission side edge node S - relay node L1 - relay node L5 - relay node L4 - reception side edge node R is calculated in advance, and a second cut through path C2, for which an establishing path of transmission side edge node S - relay node L1 - relay node L2 - relay node L3 - relay node L4 - reception side edge node R is calculated in advance; the establishing path of the first cut through path C1 passes through three relay nodes, and the establishing path of the second cut through path C2 passes through four relay nodes. As a result, a comparison between the cut through paths C1 and C2 reveals that the cut through path C1 has a shorter delay time than the cut through path C2. Therefore, as shown in FIG. 8, the burst data which belongs to the QoS class having a permissible fluctuating delay time below a threshold D is actually transferred along the establishing path which was established, this being the cut through path C1. This example relates to QoS classes based on delay times, but a variety of parameters, such as transmission capacity or confidentiality, may be similarly used.

Embodiment 3

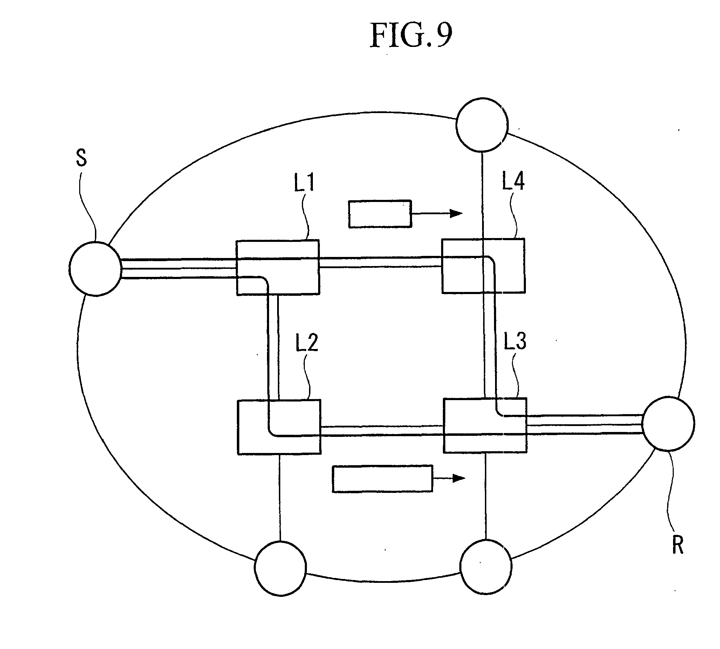

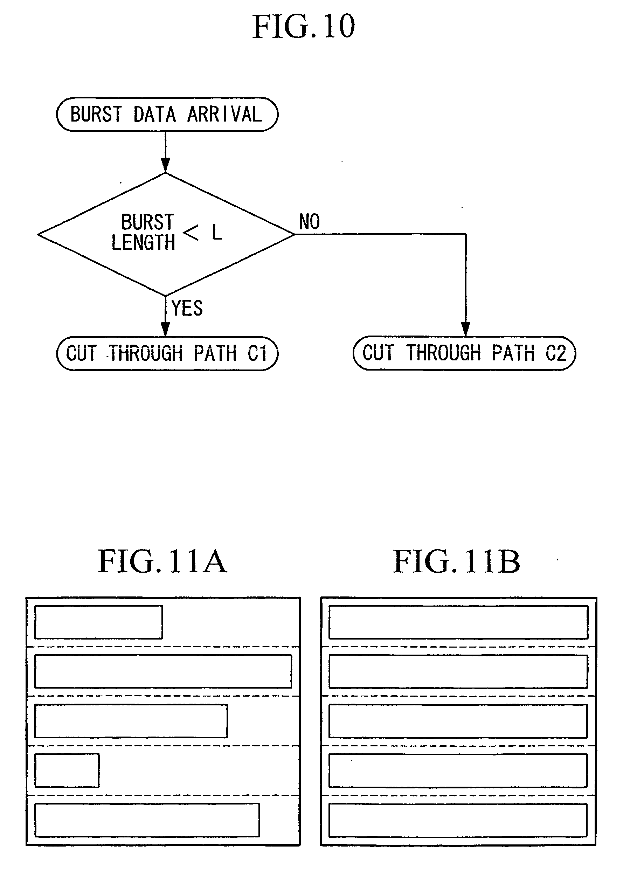

A third embodiment of this invention will be explained based on FIGS. 9 to 11. FIG. 9 is a diagram showing a plurality of cut through paths established at different burst lengths. FIG. 10 is a flowchart showing procedures of selecting a cut through path according to the third embodiment. FIGS. 11A and 11B are diagrams showing advantages of the third embodiment. As shown in FIG. 9, in the third embodiment, the cut through path establishment and release section 10 calculates in advance the establishing paths of the plurality of cut through paths C1 and C2 from one transmission side edge node S to one reception side edge node R, and the establishing paths of the cut through paths C1 and C2 to be used in transferring the burst data are allocated in advance in accordance with the burst length of the arriving burst data. As shown in FIG. 10, the cut through path is actually established along the establishing path of the establishing paths for cut through paths C1 and C2 which is allocated to the burst length, in accordance with the burst length of the burst data arriving at the transmission side edge node S.

This obtains a first advantage of enabling the load to be dispersed by allocating the cut through paths for transferring the burst data according to burst length. A second advantage is as follows. When the constitution comprises a burst buffer for temporarily storing the burst data at the nodes, since burst data having a variety of burst lengths are stored in a fixed storage region of the burst buffer, empty regions are generated. In contrast, when the burst length is fixed, as shown in FIG. 11B, burst data having exactly matching burst lengths are stored in a storage region of the burst buffer provided in advance in correspondence with the burst length, so that no empty regions are generated. This enables the capacity of the burst buffer to be used effectively.

Embodiment 4

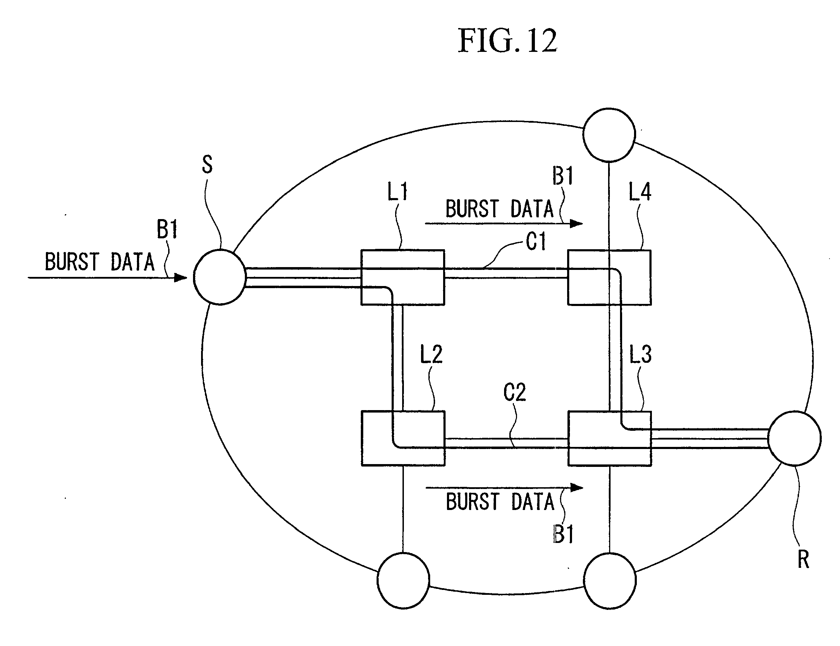

A fourth embodiment of this invention will be explained with reference to FIGS. 2, 3, and 12. FIG. 12 is a diagram showing an optical communication network in which working and protection cut through paths have been established.

In the fourth embodiment, as shown in FIG. 3, the cut through path establishment and release section 10 calculates in advance establishing paths of cut through paths from one transmission side edge node S to a plurality of reception side edge nodes R. As shown in FIG. 2, the burst data arrival detection section 1 detects the arrival of a leading packet of burst data, and, as shown in FIG. 12, the cut through path establishment and release section 10 actually establishes two cut through paths as the establishing path which corresponds to the IP address of the leading packet, detected by the burst data arrival detection section 1, from among the plurality of establishing paths for cut through paths calculated in advance in accordance with the IP address. One of the cut through paths C1 is a working path and the other, C2, is a protection path. Moreover, as shown in FIG. 12, the transmission side edge node S transfers identical burst data B1 along the working path and the protection path.

Consequently, even when damage occurs on the paths which the cut through paths C1 and C2 have been established on, the burst data B1 can be transferred normally from the transmission side edge node S to the reception side edge nodes R.

Embodiment 5

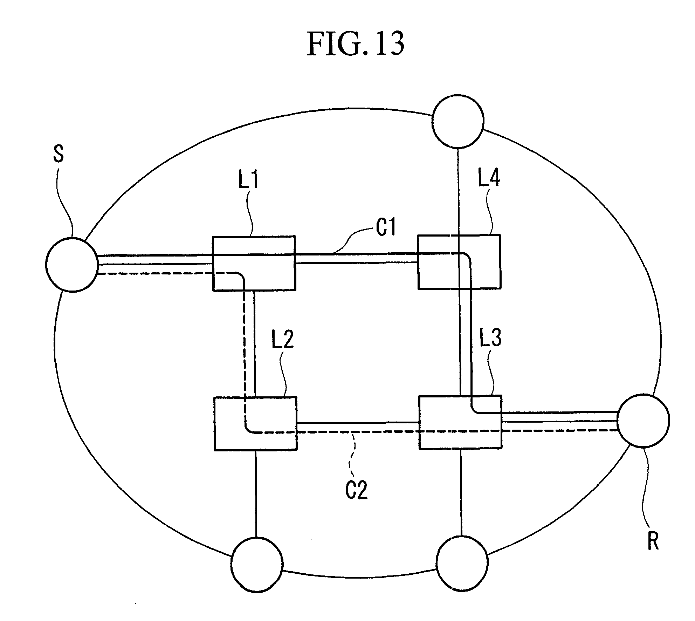

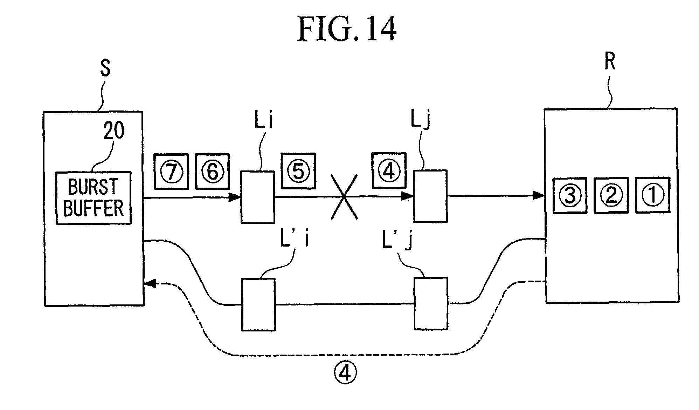

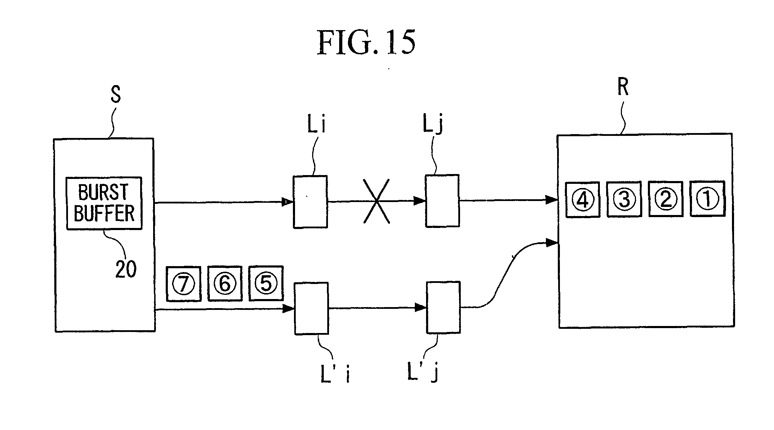

A fifth embodiment of this invention will be explained with reference to FIGS. 2, 3, 13, 14, and 15. FIG. 13 is a diagram showing an optical communication network in which working and protection cut through paths have been established. FIG. 14 is a diagram showing an operation immediately after a working cut through path has become damaged. FIG. 15 is a diagram showing an operation of retransmitting burst data using a protection path.

In the fifth embodiment, as shown in FIG. 3, the cut through path establishment and release section 10 of FIG. 2 calculates in advance establishing paths of a plurality of cut through paths from one transmission side edge node S to a plurality of reception side edge nodes R. The burst data arrival detection section 1 detects the arrival of the leading packet of burst data to the transmission side edge node S. As shown in FIG. 13, from among the establishing paths of the plurality of cut through paths, calculated in advance in accordance with the IP address of the leading packet, detected by the burst data arrival detection section 1, the cut through path establishment and release section 10 actually establishes the cut through path C1 to the reception side edge node R along the establishing path which corresponds to the IP address, and selects the establishing path of the cut through path C2, which serves as a protection path for the working path and follows a different establishing path thereto, from among the plurality of cut through path establishing paths which were calculated in advance. When the working path is damaged, the cut through path is switched from working path to the protection path which has been selected at that time.

In the fifth embodiment, the transmission side edge node S transfers burst data on the working path when no damage is detected on the establishing path established for the working path. When damage has been detected on the establishing path established for the working path, the burst data are transferred along a cut through path established along the protection path. Therefore, wavelength resource can be used more effectively than in the fourth embodiment, where the burst data is transferred only on the working path.

Furthermore, sequence numbers are appended to packets forming the burst data, and, as shown in FIG. 14, when the burst data has broken off, the transmission side edge node S is notified via the protection path of the final sequence number of burst data transferred along the working path. The transmission side edge node S refers to refers to the final sequence number, notified from the reception side edge node R prior to transferring the burst data stored by a burst buffer 20, which temporarily stores burst data, along the protection path, and, as shown in FIG. 15, deems a packet, which the next sequence number after the final sequence number is appended to, as the leading packet of burst data to be transferred along the protection path.

Embodiment 6.

The optical communication network of this invention can be realized by using a data processing device comprising a computer device. This is achieved by installing a program which allows the computer to execute the following functions: a function which corresponds to the cut through path establishment and release section 10 for establishment and release a cut through path between the transmission side edge node S, the relay nodes L1 to L4, and the reception side edge node R, as shown in FIG. 2; a function of calculating in advance establishing paths of a plurality of cut through paths from a single transmission side edge node S to a plurality of reception side edge nodes R; a function which corresponds to the burst data arrival detection section 1 for detecting the arrival of the leading packet of burst data at the transmission side edge node S; and a function of actually establishing a cut through path to the reception side edge node R along an establishing path which corresponds to the IP address, from among the establishing paths of the plurality of cut through paths which were calculated in advance in accordance with the IP address of the leading packet, detected by the detecting function.

Furthermore, the program of this invention realizes the function of measuring amounts of past traffic transferred to the plurality of reception side edge nodes R, as a function of the transmission side edge node S, and, as shown in FIG. 4, the function of calculating in advance an establishing path for a cut through path from the transmission side edge node S to the reception side edge node R to the transfers destination node exceeding a predetermined amount of traffic, in accordance with the measurement obtained by the measuring unit, as the function of calculating the establishing path.

Alternatively, the program of this invention realizes a function which corresponds to the cut through path establishment and release section 10 calculating in advance more than one establishing path of a cut through path to a transfer destination node which exceeds a predetermined amount of traffic, the number of establishing paths calculated being proportional to the amount of traffic, in accordance with the measurement obtained by the measuring function.

Alternatively, the program of this invention realizes a function which corresponds to the cut through path establishment and release section 10 for establishing a plurality of cut through paths from one transmission side edge node S to a plurality of reception side edge nodes R, and, as shown in FIGS. 5 and 6, as a function of the transmission side edge node S, a function of dispersing a plurality of packets forming a series of burst data along the plurality of cut through paths; sequence numbers of the packets before they were dispersed being appended to them after being dispersed.

Alternatively, as shown in FIGS. 7 and 8, the program of this invention realizes a function which corresponds to the cut through path establishment and release section 10 for calculating in advance the establishing paths of cut through paths C1 and C2 having different link costs from a single transmission side edge node S to a plurality of reception side edge nodes R; and, as a function of the transmission side edge node S, a function of establishing a cut through path (C1 or C2) on as establishing path having a link cost corresponding to the QoS (Quality of Service) class of the arriving burst data, from among the plurality of cut through paths C1 and C2 having different link costs.

Alternatively, as shown in FIGS. 9 and 10, the program of this invention realizes a function which corresponds to the cut through path establishment and release section 10 for establishing a plurality of cut through paths from one transmission side edge node S to a plurality of reception side edge nodes R, and establishing paths for the cut through paths used in transferring the burst data are allocated in advance, in accordance with the burst length of arriving burst data. As the actual establishing function, the program realizes a function of actually establishing a cut through path (C1 or C2) along the establishing path allocated to the burst length from among the plurality of establishing paths C1 and C2 for cut through paths, in accordance with the burst length of the arriving burst data.

Alternatively, as shown in FIG. 12, the program of this invention realizes a function of actually establishing two cut through paths C1 and C2 as the establishing paths which correspond to the IP address of the leading packet, detected by the function corresponding to the burst data arrival detection section 1, from among the plurality of establishing paths for cut through paths calculated in advance in accordance with the IP address, one of the two cut through paths being a working path and the other a protection path. In this case, the program of this invention realizes a function of transferring identical burst data on the path and the protection path, as a function of the transmission side edge node S.

Alternatively, as shown in FIG. 13, the program of this invention realizes a function of actually establishing as a working path C1 the cut through path to the reception side edge node R on the establishing path which corresponds to the IP address of the leading packet, detected by the function corresponding to the burst data arrival detection section 1, from among the plurality of establishing paths for cut through paths calculated in advance in accordance with the IP address; a function of selecting an establishing path of a protection cut through path C2 having a different path to that of the working path from among the plurality of establishing paths for cut through paths calculated in advance; and a function of actually establishing a protection cut through path on the establishing path for the protection cut through path C2 selected by the selecting function when the working cut through path C1 is damaged.

Alternatively, the program of this invention realizes, as a function of the transmission side edge node S, the function of transferring burst data along the working path when there is no detected damage to the path which the working path has been established on; and the function of transferring burst data on the protection path when damage is detected on the path which the working path has been established on.

At this time, as shown in FIGS. 14 and 15, the program of this invention appends sequence numbers to packets forming the burst data. The reception side edge node R has a function of notifying the transmission side edge node S via the protection path of the final sequence number of burst data transferred along the working path when the burst data has broken off. The transmission side edge node S has a function of temporarily storing burst data corresponding to the burst buffer 20, and refers to the final sequence number, notified from the reception side edge node R prior to transferring the burst data stored by the temporary storing unit along the protection path, and deems a packet, which the next sequence number after the final sequence number is appended to, as the leading packet of burst data to be transferred along the protection path.

The program of this invention can be installed in the computer device by storing the program on a recording medium of this invention. Alternatively, the program can be installed directly into the computer device via a network from a server who holds the program.

The computer device realizes an optical communication network capable of effectively transferring burst data while reducing the time taken to establish the cut through path.

Seventh to twelfth embodiments will subsequently be explained with reference to the drawings.

Embodiment 7

A seventh embodiment of this invention will be explained with reference to FIGS. 1 to 6. FIG. 1 is a conceptual diagram showing an optical communication network according to an embodiment of this invention. FIG. 2 is a block diagram showing a burst data detection section and a cut through path establishment and release section according to an embodiment of this invention. FIG. 3 is a conceptual diagram showing an optical communication network where a cut through path has been established. FIG. 4 is a diagram showing a cut through path establishing table according to the seventh embodiment of this invention. FIG. 5 is a diagram showing how a series of burst data is divided. FIG. 6 is a diagram showing how a series of burst data are transferred using a plurality of cut through paths according to the seventh embodiment of this invention.

In this embodiment, the transmission side edge node S and the reception side edge node R are distinguished from each other in order to simplify the explanation, but in reality, the functions of the transmission side and reception side are appended to both edge nodes, and communications can be transmitted in both directions.

As shown in FIG. 1, this invention provides an optical communication network comprising a transmission side edge node S which accommodates a data transfer source, a reception side edge node R which accommodates a data transfer destination, and relay nodes L1 to L4, provided between the transmission side edge node S and the reception side edge node R. In this embodiment, the function for establishing and releasing the cut through path corresponds to a cut through path establishment and release section 10, shown in FIG. 2, and may be appended to each of the transmission side edge node S, the relay nodes L1 to L4, and the reception side edge node R; alternatively, the function may be appended to a single device, or dispersed across a plurality of devices for managing the establishment and release of the cut through path in an optical communication network outside the nodes. The function is realized by using conventional technology, and will not be explained in detail.

As shown in FIG. 2, this invention has the following characteristics. The cut through path establishment and release section 10 calculates establishing paths of a plurality of cut through paths from one transmission side edge node S to a plurality of reception side edge nodes R in advance, irrespective of whether data is being transferred on the cut through path. The burst data detection section 3 comprises a burst data arrival detection section 1 which detects the arrival of the leading packet of burst data to the transmission side edge node S. From among the establishing paths of the plurality of cut through paths, calculated in advance in accordance with the IP address of the leading packet, detected by the burst data arrival detection section 1, the cut through path establishment and release section 10 actually establishes a cut through path to the reception side edge node R along the establishing path which corresponds to the IP address.

The header information read in section 4 reads the header information of the IP packet, and notifies the burst data arrival detection section 1. The burst data arrival detection section 1 analyzes the header information and thereby identifies the IP address. When the burst data completion detection section 2 detects that there have been no communications on the cut through path for a predetermined period of time, it determines that the burst data has ended, and the cut through path selected for transferring the burst data is cancelled.

A traffic history collection section 11 measures the amounts of past traffic transferred from the transmission side edge node S to the plurality of reception side edge nodes R, and the cut through path establishment and release section 10 calculates in advance a path to the reception side edge nodes R which exceed a predetermined amount of traffic, in accordance with the measurement obtained by the traffic history collection section 11. As shown in FIG. 4, the histories collected by the traffic history collection section 11 are stored in a cut through path establishing table for each of the reception side edge nodes at ground (#2, #3, #4, and #5).

At this time, the cut through path establishment and release section 10 calculates in advance more than one establishing path for a cut through path from the transmission side edge node S to the reception side edge node R which exceeds the predetermined amount of traffic, the number of establishing paths calculated being proportional to the amount of traffic, in accordance with the measurement obtained by the traffic history collection section 11. In the example shown in FIG. 4, one cut through path establishing path is calculated for a traffic history of between 100 Mb/s and 200 Mb/s, and two cut through paths are calculated for a traffic history of 200 Mb/s. Where the traffic history is less than 100 Mb/s, no establishing path is calculated.

Furthermore, when the cut through path establishment and release section 10 has established in advance a plurality of cut through paths from one transmission side edge node S to one reception side edge node R, the transmission side edge node S transfers a plurality of packets forming a series of burst data by dispersing them over the plurality of cut through paths. In this case, sequence numbers prior to dispersal are appended to the dispersed packets.

As shown in FIG. 5, the series of burst data is divided, and, as shown in FIG. 6, transferred by using the plurality of cut through paths; this avoids a concentration of load on a single cut through path and enables the cut through paths to be used effectively. In the example of FIG. 6, sequence numbers are appended to burst data which has been divided into ten equal sections, and the burst data are transferred in sequence (starting with the lowest number) from the transmission side edge node S along three cut through paths by using a round robin.

Due to differences in the delay characteristics of the cut through paths, the transmission sequence from the transmission side edge node may not match the receiving sequence at the reception side edge node; consequently, the sequence is adjusted at the reception side edge node based on the sequence numbers appended to the divided burst data to reproduce the original series of burst data.

Embodiment 8

An eighth embodiment of this invention will be explained based on FIGS. 7 and 8. FIG. 7 is a diagram showing a plurality of cut through paths having different link costs. FIG. 8 is a flowchart showing procedures of selecting a cut through path according to the eighth embodiment. As shown in FIG. 7, in the eighth embodiment, the cut through path establishment and release section 10 calculates in advance the establishing paths of cut through paths having different link costs from one transmission side edge node S to one reception side edge node R, and a cut through path is actually established on the establishing path having a link cost corresponding to the QoS (Quality of Service) class of the burst data arriving at the transmission side edge node S, from among the plurality of cut through paths having different link costs.

The example of FIG. 7 illustrates two cut through paths: a first cut through path C1, for which an establishing path of transmission side edge node S - relay node L1 - relay node L5 - relay node L4 - reception side edge node R is calculated in advance, and a second cut through path C2, for which an establishing path of transmission side edge node S - relay node L1 - relay node L2 - relay node L3 - relay node L4 - reception side edge node R is calculated in advance; the establishing path of the first cut through path C1 passes through three relay nodes, and the establishing path of the second cut through path C2 passes through four relay nodes. As a result, a comparison between the cut through paths C1 and C2 reveals that the cut through path C1 has a shorter delay time than the cut through path C2. Therefore, as shown in FIG. 8, the burst data which belongs to the QoS class having a permissible fluctuating delay time below a threshold D is actually transferred along the establishing path which was established, this being the cut through path C1. This example relates to QoS classes based on delay times, but a variety of parameters, such as transmission capacity or confidentiality, may be similarly used.

Embodiment 9

A ninth embodiment of this invention will be explained based on FIGS. 9 to 11. FIG. 9 is a diagram showing a plurality of cut through paths established at different burst lengths. FIG. 10 is a flowchart showing procedures of selecting a cut through path according to the ninth embodiment. FIGS. 11A and 11B are diagrams showing advantages of the ninth embodiment. As shown in FIG. 9, in the ninth embodiment, the cut through path establishment and release section 10 calculates in advance the establishing paths of the plurality of cut through paths C1 and C2 from one transmission side edge node S to one reception side edge node R, and the establishing paths of the cut through paths C1 and C2 to be used in transferring the burst data are allocated in advance in accordance with the burst length of the arriving burst data. As shown in FIG. 10, the cut through path is actually established along the establishing path of the establishing paths for cut through paths C1 and C2 which is allocated to the burst length, in accordance with the burst length of the burst data arriving at the transmission side edge node S.

This obtains a first advantage of enabling the load to be dispersed by allocating the cut through paths for transferring the burst data according to burst length. A second advantage is as follows. When the constitution comprises a burst buffer for temporarily storing the burst data at the nodes, since burst data having a variety of burst lengths are stored in a fixed storage region of the burst buffer, empty regions are generated. In contrast, when the burst length is fixed, as shown in FIG. 11B, burst data having exactly matching burst lengths are stored in a storage region of the burst buffer provided in advance in correspondence with the burst length, so that no empty regions are generated. This enables the capacity of the burst buffer to be used effectively.

Embodiment 10

A tenth embodiment of this invention will be explained with reference to FIGS. 2, 3, and 12. FIG. 12 is a diagram showing an optical communication network in which working and protection cut through paths have been established. In the tenth embodiment, as shown in FIG. 3, the cut through path establishment and release section 10 calculates in advance establishing paths of cut through paths from one transmission side edge node S to a plurality of reception side edge nodes R, irrespective of whether data is being transferred on the cut through path. As shown in FIG. 2, the burst data arrival detection section 1 detects the arrival of a leading packet of burst data, and, as shown in FIG. 12, the cut through path establishment and release section 10 actually establishes two cut through paths as the establishing path which corresponds to the IP address of the leading packet, detected by the burst data arrival detection section 1, from among the plurality of establishing paths for cut through paths calculated in advance in accordance with the IP address. One of the cut through paths C1 is a working path and the other, C2, is a protection path. Moreover, as shown in FIG. 12, the transmission side edge node S transfers identical burst data B1 along the working path and the protection path.

Consequently, even when damage occurs on the paths which the cut through paths C1 and C2 have been established on, the burst data B1 can be transferred normally from the transmission side edge node S to the reception side edge nodes R.

Embodiment 11

An eleventh embodiment of this invention will be explained with reference to FIGS. 2, 3, 13, 14, and 15. FIG. 13 is a diagram showing an optical communication network in which working and protection cut through paths have been established. FIG. 14 is a diagram showing an operation immediately after a working cut through path has become damaged. FIG. 15 is a diagram showing an operation of retransmitting burst data using a protection path.

In the eleventh embodiment, as shown in FIG. 3, the cut through path establishment and release section 10 of FIG. 2 calculates in advance establishing paths of a plurality of cut through paths from one transmission side edge node S to a plurality of reception side edge nodes R, irrespective of whether data is to be transferred on the cut through path. The burst data arrival detection section 1 detects the arrival of the leading packet of burst data to the transmission side edge node S. As shown in FIG. 13, from among the establishing paths of the plurality of cut through paths, calculated in advance in accordance with the IP address of the leading packet, detected by the burst data arrival detection section 1, the cut through path establishment and release section 10 actually establishes the cut through path C1 to the reception side edge node R along the establishing path which corresponds to the IP address, and selects the establishing path of the cut through path C2, which serves as a protection path for the working path and follows a different establishing path thereto, from among the plurality of cut through path establishing paths which were calculated in advance. When the working path is damaged, the cut through path is switched from working path to the protection path which has been selected at that time.

In the eleventh embodiment, the transmission side edge node S transfers burst data on the working path when no damage is detected on the establishing path established for the working path. When damage has been detected on the establishing path established for the working path, the burst data are transferred along a cut through path established along the protection path. Therefore, wavelength resource can be used more effectively than in the tenth embodiment, where the burst data is transferred only on the working path.

Furthermore, sequence numbers are appended to packets forming the burst data, and, as shown in FIG. 14, when the burst data has broken off, the transmission side edge node S is notified via the protection path of the final sequence number of burst data transferred along the working path. The transmission side edge node S refers to refers to the final sequence number, notified from the reception side edge node R prior to transferring the burst data stored by a burst buffer 20, which temporarily stores burst data, along the protection path, and, as shown in FIG. 15, deems a packet, which the next sequence number after the final sequence number is appended to, as the leading packet of burst data to be transferred along the protection path.

Embodiment 12

The optical communication network of this invention can be realized by using a data processing device comprising a computer device. This is achieved by installing a program which allows the computer to execute the following functions: a function which corresponds to the cut through path establishment and release section 10 for establishing and releasing a cut through path between the transmission side edge node S, the relay nodes L1 to L4, and the reception side edge node R, irrespective of whether data is to be transferred on the cut through path, as shown in FIG. 2; a function of calculating in advance establishing paths of a plurality of cut through paths from a single transmission side edge node S to a plurality of reception side edge nodes R; a function which corresponds to the burst data arrival detection section 1 for detecting the arrival of the leading packet of burst data at the transmission side edge node S; and a function of actually establishing a cut through path to the reception side edge node R along an establishing path which corresponds to the IP address, from among the establishing paths of the plurality of cut through paths which were calculated in advance in accordance with the IP address of the leading packet, detected by the detecting function.

Furthermore, the program of this invention realizes the function of measuring amounts of past traffic transferred to the plurality of reception side edge nodes R, as a function of the transmission side edge node S, and, as shown in FIG. 4, the function of calculating in advance establishing paths for cut through paths from the transmission side edge node S to the reception side edge nodes R to the transfer destination node exceeding a predetermined amount of traffic, in accordance with the measurement obtained by the measuring unit, as the function of calculating the establishing path.

Alternatively, the program of this invention realizes a function which corresponds to the cut through path establishment and release section 10 calculating in advance more than one establishing path of a cut through path to a transfer destination node which exceeds a predetermined amount of traffic, the number of establishing paths calculated being proportional to the amount of traffic, in accordance with the measurement obtained by the measuring function.

Alternatively, the program of this invention realizes a function which corresponds to the cut through path establishment and release section 10 for establishing a plurality of cut through paths from one transmission side edge node S to a plurality of reception side edge nodes R, and, as shown in FIGS. 5 and 6, as a function of the transmission side edge node S, a function of dispersing a plurality of packets forming a series of burst data along the plurality of cut through paths; sequence numbers of the packets before they were dispersed being appended to them after being dispersed.

Alternatively, as shown in FIGS. 7 and 8, the program of this invention realizes a function which corresponds to the cut through path establishment and release section 10 for calculating in advance the establishing paths of cut through paths C1 and C2 having different link costs from a single transmission side edge node S to a plurality of reception side edge nodes R; and, as a function of the transmission side edge node S, a function of selecting a cut through path (C1 or C2) on an establishing path having a link cost corresponding to the QoS (Quality of Service) class of the arriving burst data, from among the plurality of cut through paths C1 and C2 having different link costs.

Alternatively, as shown in FIGS. 9 and 10, the program of this invention realizes a function which corresponds to the cut through path establishment and release section 10 for establishing a plurality of cut through paths from one transmission side edge node S to a plurality of reception side edge nodes R, and establishing paths for the cut through paths used in transferring the burst data are allocated in advance, in accordance with the burst length of arriving burst data. As the actual establishing function, the program realizes a function of actually establishing a cut through path (C1 or C2) along the establishing path allocated to the burst length from among the plurality of establishing paths C1 and C2 for cut through paths, in accordance with the burst length of the arriving burst data.

Alternatively, as shown in FIG. 12, the program of this invention realizes a function of actually establishing two cut through paths C1 and C2 as the establishing paths which correspond to the IP address of the leading packet, detected by the function corresponding to the burst data arrival detection section 1, from among the plurality of establishing paths for cut through paths calculated in advance in accordance with the IP address, one of the two cut through paths being a working path and the other a protection path. In this case, the program of this invention realizes a function of transferring identical burst data on the working path and the protection path, as a function of the transmission side edge node S.

Alternatively, as shown in FIG. 13, the program of this invention realizes a function of actually establishing as a working path C1 the cut through path to the reception side edge node R on the establishing path which corresponds to the IP address of the leading packet, detected by the function corresponding to the burst data arrival detection section 1, from among the plurality of establishing paths for cut through paths calculated in advance in accordance with the IP address; a function of selecting an establishing path of a protection cut through path C2 having a different path to that of the working path from among the plurality of establishing paths for cut through paths calculated in advance; and a function of actually establishing a protection cut through path on the establishing path for the protection cut through path C2 selected by the selecting function when the working cut through path C1 is damaged.

Alternatively, the program of this invention realizes, as a function of the transmission side edge node S, the function of transferring burst data along the working path when there is no detected damage to the path which the working path has been established on; and the function of transferring burst data on the protection path when damage is detected on the path which the working path has been established on.

At this time, as shown in FIGS. 14 and 15, the program of this invention appends sequence numbers to packets forming the burst data. The reception side edge node R has a function of notifying the transmission side edge node S via the protection path of the final sequence number of burst data transferred along the working path when the burst data has broken off. The transmission side edge node S has a function of temporarily storing burst data corresponding to the burst buffer 20, and refers to the final sequence number, notified from the reception side edge node R prior to transferring the burst data stored by the temporary storing unit along the protection path, and deems a packet, which the next sequence number after the final sequence number is appended to, as the leading packet of burst data to be transferred along the protection path.

The program of this invention can be installed in the computer device by storing the program on a recording medium of this invention. Alternatively, the program can be installed directly into the computer device via a network from a server who holds the program.

The computer device realizes an optical communication network capable of effectively transferring burst data while reducing the time taken to establish the cut through path by using cut through paths which have been established half-securely.

Subsequently, thirteenth to fifteenth embodiments of this invention will be explained with reference to the drawings.

Embodiment 13

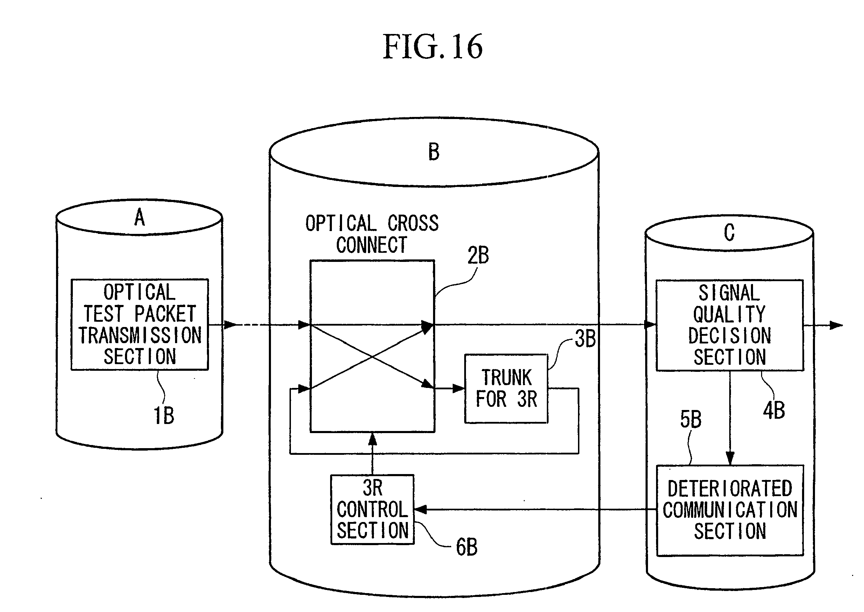

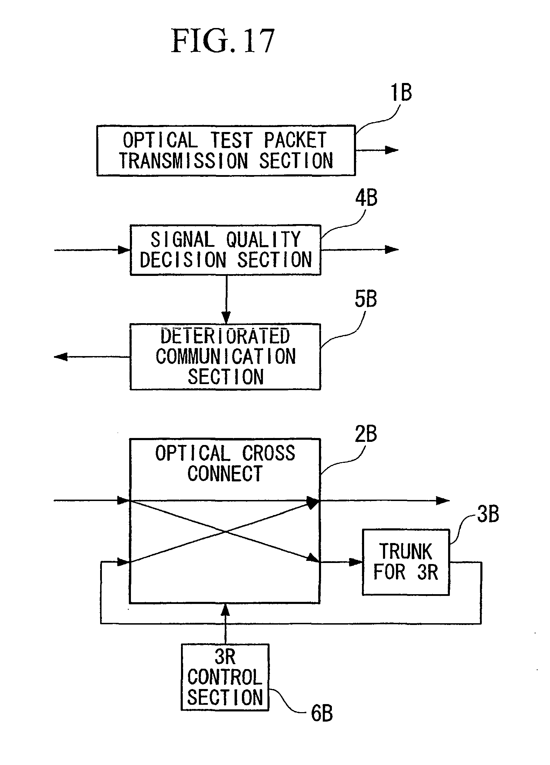

A thirteenth embodiment of the node and optical path network according to this invention will be explained with reference to FIGS. 16 and 17. FIG. 16 is a diagram showing the constitution of an optical path network according to the thirteenth embodiment. FIG. 17 is a block diagram showing a node according to the thirteenth embodiment.

As shown in FIGS. 16 and 17, the node of the thirteenth embodiment comprises an optical test packet transmission section 1B which, prior to the establishing of an optical path, transmits an optical packet for test along the path where the optical path is to be established, a signal quality decision section 4B which receives the optical packet for test and determines its signal quality, a deteriorated communication section 5B which, when the determining unit has determined that the signal quality has deteriorated, notifies the node of the preceding stage of that fact, and a trunk for 3R 3B and a 3R control section 6B which receive the notification and execute 3R processing of subsequent optical packets traveling along the path.

In order to make the explanation easier to understand, FIG. 16 shows an example where the nodes A to C have different block constitutions, but in reality, as shown in FIG. 17, the nodes A to C share the same block constitution, the block constitution of each node being determined by its purpose, as shown in FIG. 16.

The operation of the optical path network of the thirteenth embodiment will be explained with reference to FIG. 16. Prior to establishing the optical path, the optical test packet transmission section 1B on the transmission side transmits an optical packet for test along the planned route of the optical path. Signal quality decision sections 4B at each node determine the signal quality of the optical packet for test. When the signal quality decision section 4B at the node C detects deterioration in the signal quality, the deteriorated communication section 5B notifies the node B of the previous stage of this fact. The 3R control section 6B of the node B which received the notification of the deterioration, controls an optical cross connect 2B and connects the path of the optical packet for test to the trunk for 3R 3B. Consequently, the data transmitted along the path is 3R processed.

After the test of the path through nodes A to C has ended, the cut through path is established and burst data is transferred along it. In transferring burst data along the cut through path, the data is transferred from node A to node B without converting the optical signal to an electrical signal. At node B, the optical signal is temporarily converted to an electrical signal for 3R processing, and the 3R processed electrical signal is then converted back to an optical signal, and transmitted to the node C.

In this embodiment, since the position for 3R processing can be identified by using the optical packet for test, the position can be identified more easily and reliably than by the conventional method of calculation, eliminating the time taken by this calculation.

Embodiment 14

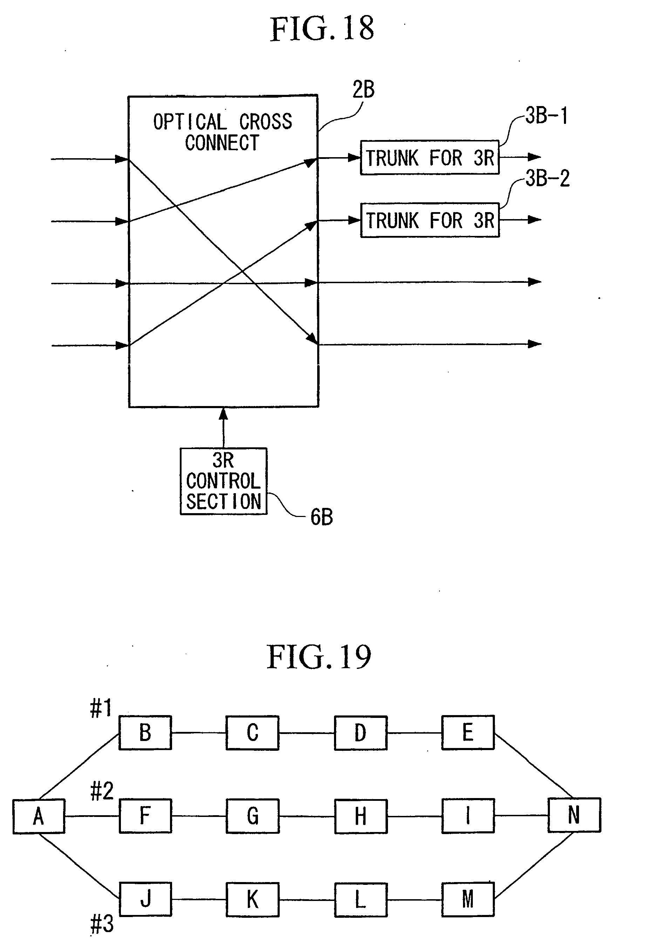

A fourteenth embodiment of this invention will be explained with reference to FIG. 18. FIG. 18 shows a 3R processing constitution according to the fourteenth embodiment. The 3R processing constitution of the fourteenth embodiment is characterized in that trunks for 3R 3B-1 and 3B-2 are provided at output ports of the optical cross connect 2B. Therefore, the 3R processing path does not loop back, as in the thirteenth embodiment, consequently requiring fewer wavelength conversions than the thirteenth embodiment, and reducing signal loss and deterioration.

In the thirteenth embodiment, the trunk for 3R 3B occupies a dedicated input/output port. However, in the fourteenth embodiment, the trunks for 3R 3B-1 and 3B-2 are provided at output ports which connect to the transmission path, thereby avoiding any reduction in the number of output ports connecting to the transmission path and using the output ports more effectively.

Embodiment 15

The node according to this embodiment can be realized by using an information processing device comprising a computer device. That is, a program is installed in the computer device, allowing it to execute the following functions, corresponding to a device for controlling the nodes: a function corresponding to the optical test packet transmission section 1B, which, prior to establishing the optical path, transmits an optical packet for test along the planned route of the optical path; a function corresponding to the signal quality decision sections 4B, which receives the optical packet for test and determines its signal quality; a function corresponding to the deteriorated communication section 5B, which notifies the router of the previous stage when the signal quality decision section 4B has detected deterioration in the signal quality; and a function corresponding to the 3R control section 6B which receives the notification of the deterioration, and 3R processes subsequent optical packets transmitted along the path.

The program of the fifteenth embodiment can be installed in a computer device by storing it in a recording medium of this invention. Alternatively, the program of this embodiment can be installed directly in the computer device via a network from a server who holds the program.

Consequently, it is possible to realize a node and optical path network wherein the time and procedures required to establish the position for 3R processing can be reduced, and the position can be precisely identified, thereby using the network resources effectively.

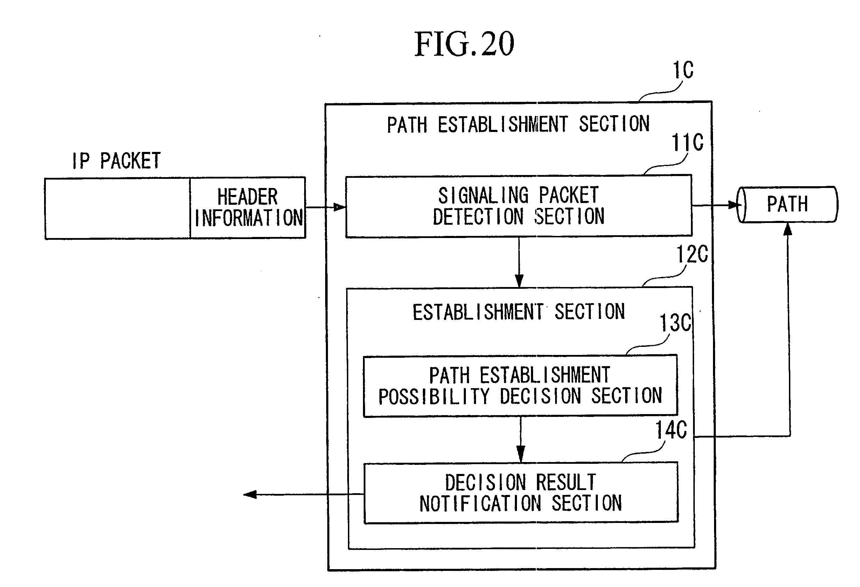

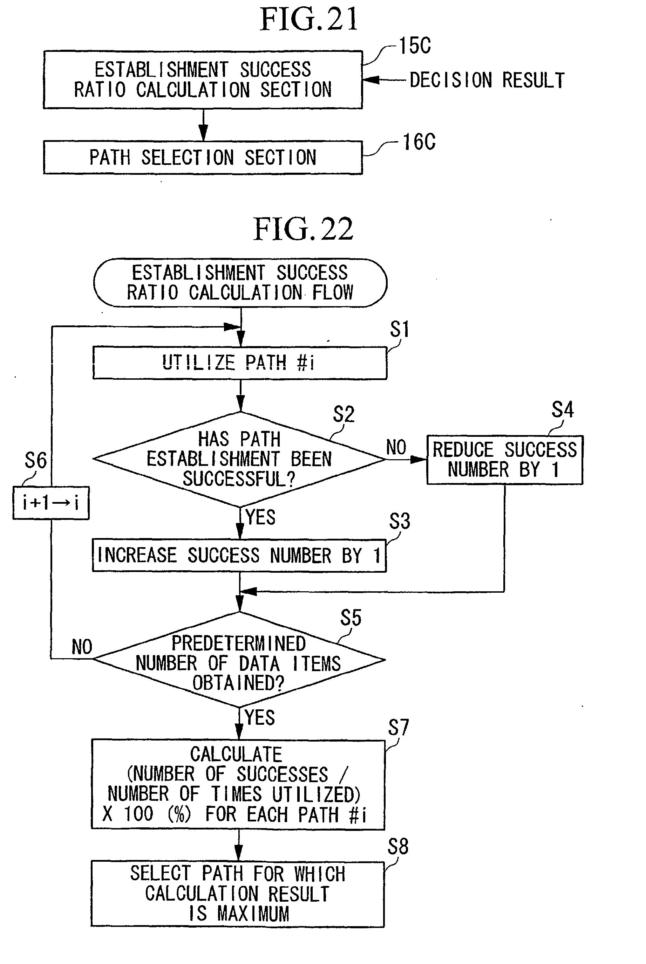

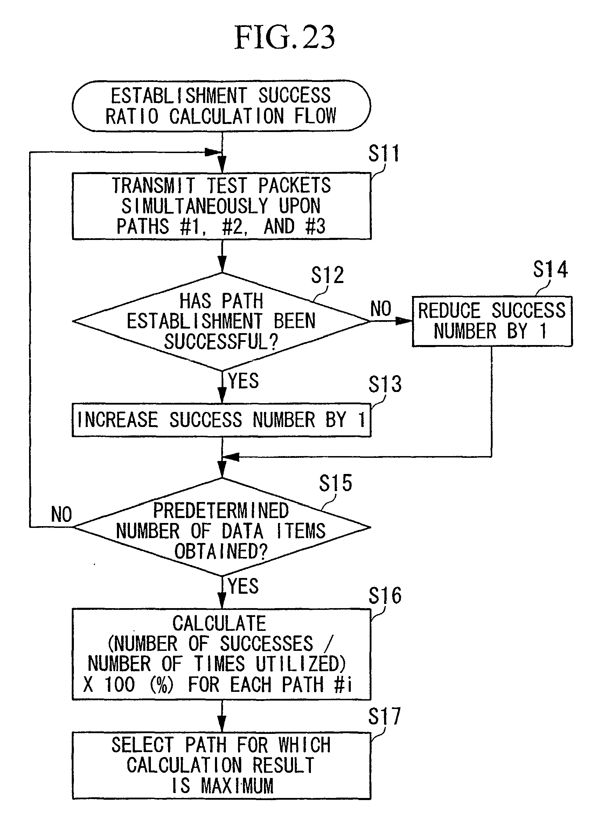

Subsequently, the node and network (optical communication network) according to sixteenth and seventeenth embodiments of this invention will be explained with reference to FIGS. 19 to 23. FIG. 19 is a conceptual diagram showing a network according to the sixteenth and seventeenth embodiments. FIG. 20 is a block diagram showing a path establishment section according to the sixteenth and seventeenth embodiments. FIG. 21 is a block diagram showing a transmission side node according to the sixteenth and seventeenth embodiments. FIG. 22 is a flowchart showing the establishing success rate calculation flow according to the sixteenth embodiment. FIG. 23 is a flowchart showing the establishing success rate calculation flow according to the seventeenth embodiment.

As shown in FIG. 19, the network according to the sixteenth and seventeenth embodiments comprises a transmission side node A, a reception side node N, and relay nodes B to M provided on paths between the transmission side node A and the reception side node N. As shown in FIG. 20, the relay nodes B to M comprise a path establishment section 1C which establishes a path in accordance with the IP address of the arriving IP packet. The path establishment section 1C comprises a signaling packet detection section 11C which detects the arrival of an IP packet for signaling, transferred prior to establishing the path, and an establishment section 12C which establishes a path to a node in next stage when the arrival of the IP packet has been detected by the signaling packet detection section 11C. The establishment section 12C comprises a path establishment possibility decision section 13C which determines whether it is permissible to establish a path to a node in the next stage, and a decision result notification section 14C which notifies the transmitting node A of the result determined by the path establishment possibility decision section 13C. As shown in FIG. 19, a plurality of paths #1, #2, and #3 are established in advance between the transmission side node A and the reception side node N. As shown in FIG. 21, the transmission side node A comprises an establishment success ratio calculation section 15C which calculates the path establishing success rate of the path establishment section 1C in accordance with the determination result, notified by the decision result notification section 14C, and a path selection section 16 which establishes a path on the path having a high path establishing success rate, in accordance with the result calculated by the establishment success ratio calculation section 15C.

Embodiment 16

The establishing success rate calculation flow of the sixteenth embodiment will be explained with reference to FIG. 22. The establishing success rate calculation flow of the sixteenth embodiment statistically calculates the path establishing success rate of each of the paths #1 to #3 during normal data transferring. In the sixteenth embodiment, the plurality of paths #1, #2, and #3 shown in FIG. 19 are used cyclically each time data is transferred. For example, as shown in FIG. 22, when data is transferred, the path #1 is used first (step S1). In transferring the data, when the path has been established successfully (step S2), 1 is added to the success number (step S3). When the path establishing was a failure, 1 is subtracted from the success number (step S4). When the subtraction results in a minus figure, the success number is zero. In the next data transferred process, the path #2 is used (step S6, step S1) As in the case of the path #1, when the path has been established successfully, 1 is added to the success number (step S3). When the path establishing was a failure, 1 is subtracted from the success number (step S4).

In the next data transferred process, the path #3 is used (step S6, step S1). As in the case of the paths #1 and #2, when the path has been established successfully, 1 is added to the success number (step S3). When the path establishing was a failure, 1 is subtracted from the success number (step S4). In this way, when a predetermined number of data have been obtained (step S5), the following calculation is made for each of the paths #1, #2, and #3

$$(\text{success number} / \text{number of times utilized}) \times 100\ (\%)$$

(step S7), and the path with the highest calculated result is selected as the path having the highest establishing success rate (step S8).

By calculating the establishing success rate at fixed intervals, and using the path thereby selected to transfer data, it is possible to use paths with high establishing success rates.

Embodiment 17

The establishing success rate calculation flow of the seventeenth embodiment will be explained with reference to FIG. 23. The establishing success rate calculation flow of the seventeenth embodiment statistically calculates the path establishing success rates of the paths #1 to #3 after transmitting a test packet along each path. In comparison with the sixteenth embodiment, since the seventeenth embodiment uses a test packet which has no relationship with data transferring, the calculation can be made at any given time. As shown in FIG. 23, test packets are transmitted simultaneously on paths #1, #2, and #3 (step S11). In the process of transferring the test packets, when the path has been established successfully (step S12), 1 is added to the success number (step S13). When the path establishing was a failure, 1 is subtracted from the success number (step S14). When the subtraction results in a minus figure, the success number is zero. In this way, when a predetermined number of data have been obtained (step S15), the following calculation is made for each of the paths #1, #2, and #3

$$(\text{success number} / \text{number of times utilized}) \times 100\ (\%)$$

(step S16), and the path with the highest calculated result is selected as the path having the highest establishing success rate (step S17).

By calculating the establishing success rate at fixed intervals, and using the path thereby selected to transfer data, it is possible to use paths with high establishing success rates.

Embodiment 18

The node according to this embodiment can be realized by using an information processing device comprising a computer device. That is, a program is installed in the computer device, allowing it to execute the following functions, corresponding to a device for controlling the transmission side node A. The functions comprise establishing a path to a node in next stage when the arrival of an IP packet for signaling, transferred prior to establishing the path, has been detected; determining whether it is permissible to establish a path to a node in the next stage; notifying the transmitting node of the determination result; and a function of calculating path establishing success rates in accordance with the determination results notified from relay nodes B to M relating to a plurality of path to the reception side node N, this function corresponding to the establishment success ratio calculation section 15C; and a function of establishing a path on the path having a high path establishing success rate, in accordance with the result calculated by the establishment success ratio calculation section 15C, this function corresponding to the path selection section 16C. This program enables the computer device to control the transmission side node A. The devices for controlling the relay nodes B to M, and the receiving node N, can also be realized by using a computer device, but since this is achieved by conventional means it will not be explained here.

The program of the eighteenth embodiment can be installed in a computer device by storing it in a recording medium of this invention. Alternatively, the program of this embodiment can be installed directly in the computer device via a network from a server who holds the program.

Consequently, it is possible to realize a node and optical path network which can increase the success rate of the path establishment, setting the path more speedily and using the network resources effectively.

## Claims

**1.** A node comprising:

a data transferring function unit for transferring data;
a data receiving function unit for receiving data;
an establishing unit for establishing and releasing a cut through path for burst data to a node of the next stage; and a detecting unit which detects the arrival of a leading packet of said burst data,
wherein the establishing and releasing unit comprises: a calculating unit which calculates in advance establishment paths for a cut through path to a plurality of nodes in the next stage, the establishment paths being paths from one transmission side edge node, which transmitted a request to establish a path prior to transferring said burst data, to a plurality of reception side edge nodes, which is the final destination of a said request; and a unit which factually establishes a cut through path along an establishment path which corresponds to an IP address of the leading packet, detected by the detecting unit among the establishment paths calculated in advance.

**2.** A node according to Claim 1, further comprising a measuring unit which measures the amounts of past traffic transferred to a plurality of nodes of the next stage,
wherein the calculating unit comprises a unit which calculates in advance an establishment path for a cut through path to the transferring destination node exceeding a predetermined amount of traffic in accordance with the measurement obtained by the measuring unit.

**3.** A node according to Claim 2, the calculating unit comprises a unit which calculates in advance at least one establishment path of a cut through path to a transferring destination node which exceeds a predetermined amount of traffic, the number of establishment path calculated being proportional to the amount of traffic, in accordance with the measurement obtained by the measuring unit.

4. A node according to Claim 3, wherein the establishing unit comprising a unit which establishes cut through paths to a plurality of next stages,
the node further comprises a transferring unit which disperses and transfers a plurality of packets forming a series of burst data to the plurality of cut through paths, and
sequence numbers of the packets before the packets were dispersed being appended to the packets after being dispersed.

5. A node according to Claim 3, wherein the unit for calculating establishment path comprises a unit which calculates in advance the establishment path of cut through paths to a plurality of nodes in the next stage having different link costs, and
the establishing unit comprises a unit which establishes a cut through path on an establishment path having a link cost corresponding to the QoS, Quality of service class, of the arriving burst data, from among the plurality of cut through paths having different link costs.

6. A node according to Claim 3, wherein the calculating unit comprises a unit which calculates in advance establishment paths of cut through paths for a plurality of nodes in the next stage,
an establishment path for the cut through path used in transferring the burst data is allocated in advance, in accordance with the burst length of arriving burst data,
the establishing unit comprises a unit which actually establishes a cut through path along the establishment path allocated to the burst length from among the plurality of establishment paths for cut through paths, in accordance with the burst length of the arriving burst data.

7. A node according to Claim 1, wherein the establishing unit establishes a cut through path to a node of the next stage on an establishment path which corresponds to the IP address from among the plurality of establishment paths for cut through paths calculated in advance.

8. A node according to Claim 7, further comprising a measuring unit which measures the amounts of past traffic transferred to the plurality of nodes in the next stage,
wherein the calculating unit comprises a unit which calculates in advance an establishment path for a cut through path for a path to a transferring destination node which exceeds a predetermined amount of traffic, in accordance with the measurement obtained by the measuring unit.

9. A node according to Claim 8, wherein the calculating unit comprises a unit which calculates in advance at least one establishment path of a cut through path to a transferring destination node which exceeds a predetermined amount of traffic, the number of establishment paths calculated being proportional to the amount of traffic, in accordance with the measurement obtained by the measuring unit.

10. A node according to Claim 9, wherein
the establishing unit comprises a unit which establishes cut through paths to a plurality of next stages,
the node further comprises a unit which disperses and transfers a plurality of packets forming a series of burst data along the plurality of cut through paths; and
sequence numbers prior to dispersal being appended to each of the dispersed packets.

11. A node according to Claim 9, wherein the unit for calculating establishing path comprises a unit which calculates in advance the establishment path of cut through paths to a plurality of nodes in the next stage having different link costs, and
the establishing unit comprises a unit which establishes a cut through path on an establishment path having a link cost corresponding to the QoS, Quality of Service class, of the arriving burst data, from among the plurality of cut through paths having different link costs.

12. A node according to Claim 9, wherein
the calculating unit comprises a unit which calculates in advance establishment paths of cut through paths for a plurality of nodes in the next stage,
an establishment path for the cut through path used in transferring the burst data is allocated in advance, in accordance with the burst length of arriving burst data, and
the establishing unit comprises a unit which actually establishes a cut through path along the establishment path allocated to the burst length from among the plurality of establishment paths for cut through paths, in accordance with the burst length of the arriving burst data.

**13.** A node according to Claim 1, wherein
the establishing unit comprises a unit which establishes cut through paths to a plurality of next stages,
the node further comprises a unit which disperses and transfers a plurality of packets forming a series of burst data along the plurality of cut through paths, and
sequence numbers prior to dispersal being appended to each of the dispersed packets.

**14.** A node according to Claim 1, wherein the establishing unit comprises a unit which actually establishes two cut through paths as the establishment path which corresponds to the IP address of the leading packet detected by the detecting unit from among the plurality of establishment paths for cut through paths calculated in advance in accordance with the IP address, one of the cut through paths being a working path and the other a protection path.

**15.** A node according to Claim 14, further comprising a unit which transfers identical burst data along the working path and the protection path.

**16.** A node according to Claim 1, further comprising:

a unit which actually establishes as a working path the cut through path to a node in the next stage of the establishment path which corresponds to the IP address of the leading packet detected by the detecting unit from among the plurality of establishment paths for cut through paths calculated in advance in accordance with the IP address;
a selecting unit which selects an establishment path of a protection cut through path having a different path to that of the working path from among the plurality of establishment paths for cut through paths calculated in advance; and a unit which actually establishes a protection cut through path on the establishment path of the protection cut through path selected by the selecting unit when the working cut through path is damaged.

**17.** A node according to Claim 14, further comprising:

a unit which transfers burst data along the working path when there is no detected damage to the path which the working path has been established on; and
a unit which transfers burst data on the protection path when damage is detected on the path which the working path has been established on.

**18.** A node according to Claim 17, wherein sequence numbers are appended to packets forming the burst data,
the node further comprises:

a unit which notifies a node in the next stage via the protection path of the final sequence number of burst data transferred along the working path when the burst data has been lost;
a unit which temporarily accumulates burst data; and
a unit which refers to the final sequence number, notified from the node of the next stage prior to transferring the burst data accumulated by the temporary accumulating unit along the protection path, and deems a packet, which the next sequence number after the final sequence number is appended to, as the leading packet of burst data to be transferred along the protection path.

**19.** A node according to Claim 16, further comprising:

a unit which transfers burst data along the working path when there is no detected damage to the path which the working path has been established on; and
a unit which transfers burst data on the protection path when damage is detected on the path which the working path has been established on.

**20.** A node according to Claim 16, wherein sequence numbers are appended to packets forming the burst data,
the node further comprising:

a unit which notifies a node in the next stage via the protection path of the final sequence number of burst data when the burst data transferred along the working path has been lost;

a unit which temporarily accumulates burst data;
a unit which refers to the final sequence number, notified from the node of the next stage prior to transferring the burst data accumulated by the temporary accumulating unit along the protection path, and deems a packet, which the next sequence number after the final sequence number is appended to, as the leading packet of burst data to be transferred along the protection path.

**21.** A node according to in Claim 1, further comprising:

a unit which transmits an optical packet for test along a planned establishment path for the cut through path, prior to establishment of the cut through path;
a determining unit which receives the optical packet for test and determines its signal quality;
a unit which notifies a node in a preceding stage when the determining unit has determined that the signal quality has deteriorated; and
a unit which receives the notification, and performs 3R (reshaping, retiming, and regenerating) processing of optical packets which subsequently travel along the path.

**22.** A program product which is installed in an information processing device, and allows the information processing device to realize functions of establishing and releasing a cut through path for burst data to a node of the next stage, the functions comprising:

calculating in advance establishment paths for a cut through path to a plurality of nodes in the next stage, the establishment paths being paths from one transmission side edge node, which transmitted a request to establish a path prior to transfereing said burst data, to a plurality of reception side edge nodes, which is the final destination of a said request;
detecting the arrival of a leading packet of said burst data; and
actually establishing a cut through path along an establishment path which corresponds to an IP address of the leading packet detected by the detecting function among the establishment paths calculated in advance.

**23.** A program product according to Claim 22, wherein the establishing function actually establishes a cut through path along a path to a node of the next stage which corresponds to the IP address of the leading packet, detected by the detecting function, from among the plurality of cut through path establishment paths calculated in advance in accordance with the IP address.

**24.** A program product according to Claim 23, wherein
the actual establishing function establishes cut through paths to a plurality of nodes in the next stage,
the program product realizes the function of dispersing and transferring a plurality of packets forming a series of burst data along the plurality of cut through paths, sequence numbers prior to dispersal being appended to each of the dispersed packets.

**25.** A program product according to Claim 23, wherein the actually establishing function actually establishes two cut through paths as the establishment path which corresponds to the IP address of the leading packet detected by the detecting function from among the plurality of establishment paths for cut through paths calculated in advance in accordance with the IP address, one of the cut through paths being a working path and the other a protection path.

**26.** A program product according to Claim 25, wherein the program product realizes the function of transferring identical burst data along the working path and the protection path.

**27.** A program product according to Claim 25, wherein the program product further realizes the functions of:

transferring burst data along the working path when there is no detected damage to the path which the working path has been established on; and
transferring burst data on the protection path when damage is detected on the path which the working path has been established on.

**28.** A program product according to Claim 27, wherein sequence numbers are appended to packets forming the burst data,
the program product further realizes the functions of:

notifying a transmission side edge node via the protection path of the final sequence number of burst data transferred along the working path when the burst data has been lost;
temporarily accumulating burst data; and
referring to the final sequence number, notified from the node of the next stage prior to transferring the burst data, accumulated by the temporary accumulating function, along the protection path, and deeming a packet, which the next sequence number after the final sequence number is appended to, as the leading packet of burst data to be transferred along the protection path.

**29.** A program product according to Claim 23, wherein the program product further realizes the functions of:

actually establishing as a working path the cut through path which corresponds to the IP address of the leading packet detected by the detecting function from among the plurality of establishment paths for cut through paths calculated in advance in accordance with the IP address;
selecting an establishment path of a protection cut through path having a different path to that of the working path from among the plurality of establishment paths for cut through paths calculated in advance; and
actually establishing a protection cut through path on the protection cut through path establishment path selected by the selecting function when the working cut through path is damaged.

**30.** A program product according to Claim 29, wherein the program further realizes the functions of:

transferring burst data along the working path when there is no detected damage to the path which the working path has been established on; and
transferring burst data on the protection path when damage is detected on the path which the working path has been established on.

**31.** A program product according to Claim 30, wherein sequence numbers are appended to packets forming the burst data,
the program product further realizes the functions of:

notifying a transmission side edge node via the protection path of the final sequence number of burst data transferred along the working path when the burst data has been lost;
temporarily accumulating burst data; and
referring to the final sequence number, notified from the node of the next stage prior to transferring the burst data, accumulated by the temporary accumulating function, along the protection path, and deeming a packet, which the next sequence number after the final sequence number is appended to, as the leading packet of burst data to be transferred along the protection path.

**32.** A program product according to Claim 22, whereon the program product further realizes the function of measuring the amounts of past traffic transferred to a plurality of nodes of the preceding stage, and
the function of calculating establishment path calculates in advance an establishment path for a cut through path to the transferring destination node exceeding a predetermined amount of traffic in accordance with the measurement obtained by the measuring function.

**33.** A program product according to Claim 22, wherein the function of calculating establishment path calculates in advance at least one establishment path of a cut through path to a transferring destination node which exceeds a predetermined amount of traffic, the number of establishment path calculated being proportional to the amount of traffic, in accordance with the measurement obtained by the measuring function.

**34.** A program product according to Claim 22, wherein
the function of calculating establishment path calculates in advance the establishment path of cut through paths to a plurality of nodes in the next stage having different link costs; and
the actual establishing function actually establishes a cut through path on an establishment path having a link cost corresponding to the QOS, Quality of Service class, of the arriving burst data, from among the plurality of cut through paths having different link costs.

**35.** A program product according to Claim 22, wherein
the function of calculating the establishment path calculates in advance establishment paths of cut through paths for a plurality of nodes in the next stage,

an establishing path for the cut through path used in transferring the burst data is allocated in advance, in accordance with the burst length of arriving burst data, and
the actual establishing function actually establishes a cut through path along the establishment path allocated to the burst length from among the plurality of establishment paths for cut through paths, in accordance with the burst length of the arriving burst data.

**36.** A recording medium which the program product as described in Claim 23 is stored in, the recording medium being readable by the information processing device.

**37.** An optical communication network, comprising:

a transmission side edge node which accommodates a data transferring source;
a reception side edge node which accommodates a data transferring destination; and
a relay node which relays between the transmission side edge node and the reception side edge node,
wherein the nodes having the units described in Claim 2.

## Patentansprüche

**1.** Knoten, der umfasst:

eine Datenübertragungsfunktionseinheit zum Übertragen von Daten;
eine Datenempfangsfunktionseinheit zum Empfangen von Daten;
eine Aufbaueinheit zum Aufbauen und Freigeben eines Durchschaltwegs für Burst-Daten zu einem Knoten der nächsten Stufe; und
eine Detektierungseinheit, die die Ankunft eines ersten Pakets der Burst-Daten detektiert,
wobei die Aufbau- und Freigabeeinheit umfasst: eine Recheneinheit, die Aufbauwege für einen Durchschaltweg zu mehreren Knoten in der nächsten Stufe vorausberechnet, wobei die Aufbauwege Wege von einem sendeseitigen Kantenknoten, der vor Übertragung der Burst-Daten eine Anforderung zum Aufbauen eines Wegs gesendet hat, zu mehreren empfangsseitigen Kantenknoten, die das Endziel der Anforderung sind, sind; und eine Einheit, die unter den vorausberechneten Aufbauwegen einen Durchschaltweg entlang eines Aufbauwegs, der einer IP-Adresse des durch die Detektierungseinheit detektierten ersten Pakets entspricht, tatsächlich aufbaut.

**2.** Knoten nach Anspruch 1, der ferner eine Messeinheit umfasst, die die Mengen früheren Verkehrs, die zu mehreren Knoten der nächsten Stufe übertragen wurden, misst,
wobei die Recheneinheit eine Einheit umfasst, die einen Aufbauweg für einen Durchschaltweg zu dem Übertragungszielknoten, der entsprechend dem durch die Messeinheit erhaltenen Messwert eine vorgegebene Verkehrsmenge übersteigt, vorausberechnet.

**3.** Knoten nach Anspruch 2, wobei die Recheneinheit eine Einheit umfasst, die wenigstens einen Aufbauweg eines Durchschaltwegs zu einem Übertragungszielknoten, der eine vorgegebene Verkehrsmenge übersteigt, vorausberechnet, wobei die Anzahl berechneter Aufbauwege proportional zu der Verkehrsmenge entsprechend der durch die Messeinheit erhaltenen Messung ist.

**4.** Knoten nach Anspruch 3, wobei die Aufbaueinheit eine Einheit umfasst, die Durchschaltwege zu mehreren nächsten Stufen aufbaut,
wobei der Knoten ferner eine Übertragungseinheit umfasst, die mehrere Pakete, die eine Reihe von Burst-Daten bilden, zu den mehreren Durchschaltwegen verteilt und überträgt, und
wobei an die Pakete, nachdem sie verteilt wurden, Folgenummern der Pakete, bevor die Pakete verteilt wurden, angehängt werden.

**5.** Knoten nach Anspruch 3, wobei die Einheit zum Berechnen eines Aufbauwegs eine Einheit umfasst, die den Aufbauweg von Durchschaltwegen zu mehreren Knoten in der nächsten Stufe mit unterschiedlichen Verbindungskosten vorausberechnet, und
die Aufbaueinheit eine Einheit umfasst, die unter den mehreren Durchschaltwegen mit unterschiedlichen Verbindungskosten auf einem Aufbauweg mit Verbindungskosten, die der QoS, der Dienstqualitätsklasse, der ankommenden Burst-Daten entsprechen, einen Durchschaltweg aufbaut.

6. Knoten nach Anspruch 3, wobei die Recheneinheit eine Einheit umfasst, die Aufbauwege von Durchschaltwegen für mehrere Knoten in der nächsten Stufe vorausberechnet,
wobei ein Aufbauweg für den Durchschaltweg, der beim Übertragen der Burst-Daten verwendet wird, entsprechend der Burst-Länge ankommender Burst-Daten im Voraus zugeordnet wird,
wobei die Aufbaueinheit eine Einheit umfasst, die unter den mehreren Aufbauwegen für Durchschaltwege einen Durchschaltweg entlang des Aufbauwegs, der der Burst-Länge zugeordnet ist, entsprechend der Burst-Länge der ankommenden Burst-Daten tatsächlich aufbaut.

7. Knoten nach Anspruch 1, wobei die Aufbaueinheit unter den mehreren vorausberechneten Aufbauwegen für Durchschaltwege einen Durchschaltweg zu einem Knoten der nächsten Stufe auf einem Aufbauweg, der der IP-Adresse entspricht, aufbaut.

8. Knoten nach Anspruch 7, der ferner eine Messeinheit umfasst, die die Mengen früheren Verkehrs misst, der zu den mehreren Knoten in der nächsten Stufe übertragen wurde,
wobei die Recheneinheit eine Einheit umfasst, die einen Aufbauweg für einen Durchschaltweg für einen Weg zu einem Übertragungszielknoten, der eine vorgegebene Verkehrsmenge übersteigt, in Übereinstimmung mit dem durch die Messeinheit erhaltenen Messwert vorausberechnet.

9. Knoten nach Anspruch 8, wobei die Recheneinheit eine Einheit umfasst, die wenigstens einen Aufbauweg eines Durchschaltwegs zu einem Übertragungszielknoten, der eine vorgegebene Verkehrsmenge übersteigt, vorausberechnet, wobei die Anzahl berechneter Aufbauwege proportional zu der Verkehrsmenge in Übereinstimmung mit dem durch die Messeinheit erhaltenen Messergebnis ist.

10. Knoten nach Anspruch 9, wobei
die Aufbaueinheit eine Einheit umfasst, die Durchschaltwege zu mehreren nächsten Stufen aufbaut,
wobei der Knoten ferner eine Einheit umfasst, die mehrere Pakete, die eine Reihe von Burst-Daten bilden, entlang der mehreren Durchschaltwege verteilt und überträgt; und
an jedes der verteilten Pakete Folgenummern vor der Verteilung angehängt werden.

11. Knoten nach Anspruch 9, wobei die Einheit zum Berechnen eines Aufbauwegs eine Einheit umfasst, die den Aufbauweg von Durchschaltwegen zu mehreren Knoten in der nächsten Stufe mit unterschiedlichen Verbindungskosten vorausberechnet, und
die Aufbaueinheit eine Einheit umfasst, die unter den mehreren Durchschaltwegen mit unterschiedlichen Verbindungskosten auf einem Aufbauweg mit Verbindungskosten, die der QoS, der Dienstqualitätsklasse, der ankommenden Burst-Daten entsprechen, einen Durchschaltweg aufbaut.

12. Knoten nach Anspruch 9, wobei
die Recheneinheit eine Einheit umfasst, die Aufbauwege von Durchschaltwegen für mehrere Knoten in der nächsten Stufe vorausberechnet,
wobei ein Aufbauweg für den Durchschaltweg, der beim Übertragen der Burst-Daten verwendet wird, entsprechend der Burst-Länge ankommenden Burst-Daten im Voraus zugeordnet wird, und
wobei die Aufbaueinheit eine Einheit umfasst, die unter den mehreren Aufbauwegen für Durchschaltwege einen Durchschaltweg entlang des Aufbauwegs, der der Burst-Länge zugeordnet ist, entsprechend der Burst-Länge der ankommenden Burst-Daten tatsächlich aufbaut.

13. Knoten nach Anspruch 1, wobei
die Aufbaueinheit eine Einheit umfasst, die Durchschaltwege zu mehreren nächsten Stufen aufbaut,
wobei der Knoten ferner eine Einheit umfasst, die mehrere Pakete, die eine Reihe von Burst-Daten entlang der mehreren Durchschaltwege bilden, verteilt und überträgt; und
an jedes der verteilten Pakete Folgenummern vor der Verteilung angehängt werden.

14. Knoten nach Anspruch 1, wobei die Aufbaueinheit eine Einheit umfasst, die unter den mehreren Aufbauwegen für Durchschaltwege, die entsprechend der IP-Adresse vorausberechnet wurden, zwei Durchschaltwege als den Aufbauweg, der der IP-Adresse des durch die Detektierungseinheit detektierten ersten Pakets entspricht, tatsächlich aufbaut, wobei einer der Durchschaltwege ein Arbeitsweg und der andere ein Schutzweg ist.

15. Knoten nach Anspruch 14, der ferner eine Einheit umfasst, die entlang des Arbeitswegs und des Schutzwegs gleiche Burst-Daten überträgt.

**16.** Knoten nach Anspruch 1, der ferner umfasst:

eine Einheit, die unter den mehreren Aufbauwegen für Durchschaltwege, die entsprechend der IP-Adresse vorausberechnet wurden, den Durchschaltweg zu einem Knoten in der nächsten Stufe des Aufbauwegs, der der IP-Adresse des durch die Detektierungseinheit detektierten ersten Pakets entspricht, als einen Arbeitsweg tatsächlich aufbaut;
eine Auswahleinheit, die unter den mehreren Aufbauwegen für Durchschaltwege, die vorausberechnet wurden, einen Aufbauweg eines Schutzdurchschaltwegs mit einem anderen Weg als dem Arbeitsweg auswählt; und
eine Einheit, die einen Schutzdurchschaltweg auf dem durch die Aufbaueinheit ausgewählten Aufbauweg des Schutzdurchschaltwegs tatsächlich aufbaut, wenn der Arbeitsdurchschaltweg beschädigt ist.

**17.** Knoten nach Anspruch 14, der ferner umfasst:

eine Einheit, die Burst-Daten entlang des Arbeitswegs überträgt, wenn es keine detektierte Beschädigung an dem Weg gibt, auf dem der Arbeitsweg aufgebaut worden ist; und
eine Einheit, die Burst-Daten auf dem Schutzweg überträgt, wenn auf dem Weg, auf dem der Arbeitsweg aufgebaut worden ist, eine Beschädigung detektiert wird.

**18.** Knoten nach Anspruch 17, wobei an Pakete, die die Burst-Daten bilden, Folgenummern angehängt werden, wobei der Knoten ferner umfasst:

eine Einheit, die einem Knoten in der nächsten Stufe über den Schutzweg die letzte Folgenummer von entlang des Arbeitswegs übertragenen Burst-Daten mitteilt, wenn die Burst-Daten verlorengegangen sind;
eine Einheit, die Burst-Daten vorübergehend ansammelt; und
eine Einheit, die auf die letzte Folgenummer Bezug nimmt, die von dem Knoten der nächsten Stufe vor Übertragung der Burst-Daten, die durch die Einheit zum vorübergehenden Ansammeln angesammelt wurden, entlang des Schutzwegs mitgeteilt wurde, und die ein Paket, an das die nächste Folgenummer nach der letzten Folgenummer angehängt ist, für das erste Paket von Burst-Daten, die entlang des Schutzwegs übertragen werden sollen, hält.

**19.** Knoten nach Anspruch 16, der ferner umfasst:

eine Einheit, die Burst-Daten entlang des Arbeitswegs überträgt, wenn es keine detektierte Beschädigung an dem Weg gibt, auf dem der Arbeitsweg aufgebaut worden ist; und
eine Einheit, die Burst-Daten auf dem Schutzweg überträgt, wenn auf dem Weg, auf dem der Arbeitsweg aufgebaut worden ist, eine Beschädigung detektiert wird.

**20.** Knoten nach Anspruch 16, wobei an Pakete, die die Burst-Daten bilden, Folgenummern angehängt werden, wobei der Knoten ferner umfasst:

eine Einheit, die einem Knoten in der nächsten Stufe über den Schutzweg die letzte Folgenummer von Burst-Daten mitteilt, wenn die entlang des Arbeitswegs übertragenen Burst-Daten verlorengegangen sind,
eine Einheit, die Burst-Daten vorübergehend ansammelt; und
eine Einheit, die auf die letzte Folgenummer Bezug nimmt, die von dem Knoten der nächsten Stufe vor Übertragung der Burst-Daten, die durch die Einheit zum vorübergehenden Ansammeln angesammelt wurden, entlang des Schutzwegs mitgeteilt wurde, und die ein Paket, an das die nächste Folgenummer nach der letzten Folgenummer angehängt ist, für das erste Paket von Burst-Daten, die entlang des Schutzwegs übertragen werden sollen, hält.

**21.** Knoten nach Anspruch 1, der ferner umfasst:

eine Einheit, die entlang eines geplanten Aufbauwegs für den Durchschaltweg vor Aufbau des Durchschaltwegs ein optisches Paket für den Test sendet;
eine Bestimmungseinheit, die das optische Paket für den Test empfängt und seine Signalqualität bestimmt;
eine Einheit, die einem Knoten in einer vorhergehenden Stufe mitteilt, wenn die Bestimmungseinheit bestimmt hat, dass sich die Signalqualität verschlechtert hat; und
eine Einheit, die die Benachrichtigung empfängt und die eine 3R-Verarbeitung (eine Umformungs-, Retiming- und Regenerierungsverarbeitung) optischer Pakete, die nachfolgend entlang des Wegs laufen, ausführt.

**22.** Programmprodukt, das in einer Informationsverarbeitungsvorrichtung installiert ist und ermöglicht, dass die Informationsverarbeitungsvorrichtung Funktionen zum Aufbauen und Freigeben eines Durchschaltwegs für Burst-Daten zu einem Knoten der nächsten Stufe verwirklicht, wobei die Funktionen umfassen:

Vorausberechnen von Aufbauwegen für einen Durchschaltweg zu mehreren Knoten in der nächsten Stufe, wobei die Aufbauwege Wege von einem sendeseitigen Kantenknoten, der vor Übertragung der Burst-Daten eine Anforderung zum Aufbauen eines Wegs gesendet hat, zu mehreren empfangsseitigen Kantenknoten, die das Endziel der Anforderung sind, sind;
Detektieren der Ankunft eines ersten Pakets der Burst-Daten; und
tatsächliches Aufbauen eines Durchschaltwegs entlang eines Aufbauwegs, der einer IP-Adresse des durch die Detektierungsfunktion detektierten ersten Pakets entspricht, unter den vorausberechneten Aufbauwegen.

**23.** Programmprodukt nach Anspruch 22, wobei die Aufbaufunktion unter den mehreren Durchschaltweg-Aufbauwegen, die entsprechend der IP-Adresse vorausberechnet wurden, einen Durchschaltweg entlang eines Wegs zu einem Knoten der nächsten Stufe, der der IP-Adresse des durch die Detektierungsfunktion detektierten ersten Pakets entspricht, tatsächlich aufbaut.

**24.** Programmprodukt nach Anspruch 23, wobei
die Funktion zum tatsächlichen Aufbauen Durchschaltwege zu mehreren Knoten in der nächsten Stufe aufbaut, wobei das Programmprodukt die Funktionen des Verteilens und Übertragens mehrerer Pakete, die eine Reihe von Burst-Daten bilden, entlang der mehreren Durchschaltwege verwirklicht, wobei an jedes der verteilten Pakete Folgenummern vor der Verteilung angehängt werden.

**25.** Programmprodukt nach Anspruch 23, wobei die Funktion zum tatsächlichen Aufbauen unter den mehreren Aufbauwegen für Durchschaltwege, die entsprechend der IP-Adresse vorausberechnet wurden, zwei Durchschaltwege als den Aufbauweg, der der IP-Adresse des durch die Detektierungsfunktion detektierten ersten Pakets entspricht, tatsächlich aufbaut, wobei einer der Durchschaltwege ein Arbeitsweg und der andere ein Schutzweg ist.

**26.** Programmprodukt nach Anspruch 25, wobei das Programmprodukt die Funktion zum Übertragen gleicher Burst-Daten entlang des Arbeitswegs und des Schutzwegs verwirklicht.

**27.** Programmprodukt nach Anspruch 25, wobei das Programmprodukt ferner die folgenden Funktionen verwirklicht:

Übertragen von Burst-Daten entlang des Arbeitswegs, wenn es an dem Weg, auf dem der Arbeitsweg aufgebaut worden ist, keine detektierte Beschädigung gibt; und
Übertragen von Burst-Daten auf dem Schutzweg, wenn auf dem Weg, auf dem der Arbeitsweg aufgebaut worden ist, eine Beschädigung detektiert wird.

**28.** Programmprodukt nach Anspruch 27, wobei an Pakete, die die Burst-Daten bilden, Folgenummern angehängt werden,
wobei das Programmprodukt ferner die folgenden Funktionen verwirklicht:

Mitteilen der letzten Folgenummer von entlang des Arbeitswegs übertragenen Burst-Daten an einen sendeseitigen Kantenknoten über den Schutzweg, wenn die Burst-Daten verlorengegangen sind;
vorübergehendes Ansammeln von Burst-Daten; und
Bezugnehmen auf die letzte Folgenummer, die von dem Knoten der nächsten Stufe vor Übertragung der Burst-Daten, die durch die Funktion zum vorübergehenden Ansammeln angesammelt wurden, entlang des Schutzwegs mitgeteilt wurde, wobei ein Paket, an das die nächste Folgenummer nach der letzten Folgenummer angehängt ist, für das erste Paket von Burst-Daten, die entlang des Schutzwegs übertragen werden sollen, gehalten wird.

**29.** Programmprodukt nach Anspruch 23, wobei das Programmprodukt ferner die folgenden Funktionen verwirklicht:

tatsächliches Aufbauen des Durchschaltwegs, der der IP-Adresse des durch die Detektierungsfunktion detektierten ersten Pakets entspricht, unter den mehreren Aufbauwegen für Durchschaltwege, die entsprechend der IP-Adresse vorausberechnet wurden, als einen Arbeitsweg;
Auswählen eines Aufbauwegs eines Schutzdurchschaltwegs mit einem anderen Weg als der Arbeitsweg unter den mehreren Aufbauwegen für Durchschaltwege, die vorausberechnet wurden; und

tatsächliches Aufbauen eines Schutzdurchschaltwegs auf dem Schutzdurchschaltweg-Aufbauweg, der durch die Auswahlfunktion ausgewählt wurde, wenn der Arbeitsdurchschaltweg beschädigt ist.

**30.** Programmprodukt nach Anspruch 29, wobei das Programmprodukt ferner die folgenden Funktionen verwirklicht:

Übertragen von Burst-Daten entlang des Arbeitswegs, wenn es an dem Weg, auf dem der Arbeitsweg aufgebaut worden ist, keine detektierte Beschädigung gibt; und
Übertragen von Burst-Daten auf dem Schutzweg, wenn auf dem Weg, auf dem der Arbeitsweg aufgebaut worden ist, eine Beschädigung detektiert wird.

**31.** Programmprodukt nach Anspruch 30, wobei an Pakete, die die Burst-Daten bilden, Folgenummern angehängt werden,
wobei das Programmprodukt ferner die folgenden Funktionen verwirklicht:

Mitteilen der letzten Folgenummer der entlang des Arbeitswegs übertragenen Burst-Daten an einen sendeseitigen Kantenknoten über den Schutzweg, wenn die Burst-Daten verlorengegangen sind;
vorübergehendes Ansammeln von Burst-Daten; und
Bezugnehmen auf die letzte Folgenummer, die von dem Knoten der nächsten Stufe mitgeteilt wurde, vor Übertragung der Burst-Daten, die durch die Funktion zum vorübergehenden Ansammeln angesammelt wurden, entlang des Schutzwegs, wobei ein Paket, an das die nächste Folgenummer nach der letzten Folgenummer angehängt wird, für das erste Paket von Burst-Daten, die entlang des Schutzwegs übertragen werden sollen, gehalten wird.

**32.** Programmprodukt nach Anspruch 22, wobei das Programmprodukt ferner die Funktion des Messens der Mengen früheren Verkehrs, die an mehrere Knoten der vorhergehenden Stufe übertragen wurden, verwirklicht, und
die Funktion zum Berechnen des Aufbauwegs einen Aufbauweg für einen Durchschaltweg zu dem Übertragungszielknoten, der eine vorgegebene Verkehrsmenge in Übereinstimmung mit dem durch die Messfunktion erhaltenen Messwert übersteigt, vorausberechnet.

**33.** Programmprodukt nach Anspruch 22, wobei die Funktion zum Berechnen des Aufbauwegs wenigstens einen Aufbauweg eines Durchschaltwegs zu einem Übertragungszielknoten, der eine vorgegebene Verkehrsmenge übersteigt, vorausberechnet, wobei die Anzahl berechneter Aufbauwege proportional zu der Verkehrsmenge in Übereinstimmung mit dem durch die Messfunktion erhaltenen Messwert ist.

**34.** Programmprodukt nach Anspruch 22, wobei
die Funktion zum Berechnen des Aufbauwegs den Aufbauweg von Durchschaltwegen zu mehreren Knoten in der nächsten Stufe mit unterschiedlichen Verbindungskosten vorausberechnet; und
die Funktion zum tatsächlichen Aufbauen unter den mehreren Durchschaltwegen mit unterschiedlichen Verbindungskosten einen Durchschaltweg auf einem Aufbauweg mit Verbindungskosten, die der QoS, Dienstqualitätsklasse, der ankommenden Burst-Daten entsprechen, tatsächlich aufbaut.

**35.** Programmprodukt nach Anspruch 22, wobei
die Funktion zum Berechnen des Aufbauwegs Aufbauwege von Durchschaltwegen für mehrere Knoten in der nächsten Stufe vorausberechnet,
ein Aufbauweg für den Durchschaltweg, der beim Übertragen der Burst-Daten verwendet wird, entsprechend der Burst-Länge ankommender Burst-Daten im Voraus zugeordnet wird, und
die Funktion zum tatsächlichen Aufbauen unter den mehreren Aufbauwegen für Durchschaltwege einen Durchschaltweg entlang des Aufbauwegs, der der Burst-Länge zugeordnet ist, entsprechend der Burst-Länge der ankommenden Burst-Daten tatsächlich aufbaut.

**36.** Aufzeichnungsmedium, auf dem das wie in Anspruch 23 beschriebene Programmprodukt gespeichert ist, wobei das Aufzeichnungsmedium durch die Informationsverarbeitungsvorrichtung lesbar ist.

**37.** Optisches Kommunikationsnetz, das umfasst:

einen sendeseitigen Kantenknoten, der eine Datenübertragungsquelle aufnimmt;
einen empfangsseitigen Kantenknoten, der ein Datenübertragungsziel aufnimmt; und
einen Weiterleitungsknoten, der zwischen dem sendeseitigen Kantenknoten und dem empfangsseitigen Kantenknoten weiterleitet,
wobei der Knoten die in Anspruch 2 beschriebenen Einheiten aufweist.

## Revendications

1. Noeud comprenant :

   une unité de fonction de transfert de données permettant de transférer des données ;
   une unité de fonction de réception de données permettant de recevoir des données ;
   une unité d'établissement permettant d'établir et de libérer un chemin de traverse pour des données en rafale vers un noeud de l'étage suivant ; et
   une unité de détection qui détecte l'arrivée d'un paquet de tête desdites données en rafale,
   dans lequel l'unité d'établissement et de libération comprend : une unité de calcul qui calcule à l'avance des chemins d'établissement pour un chemin de traverse vers une pluralité de noeuds dans l'étage suivant : les chemins d'établissement étant des chemins d'un noeud de bord côté transmission, qui a transmis une demande d'établissement d'un chemin avant transfert desdites données en rafale, vers une pluralité de noeuds de bord côté réception, qui est la destination finale d'une dite demande ; et une unité qui établit effectivement un chemin de traverse le long d'un chemin d'établissement qui correspond à une adresse IP du paquet de tête, détecté par l'unité de détection parmi les chemins d'établissement calculés à l'avance.

2. Noeud selon la revendication 1, comprenant en outre une unité de mesure qui mesure les quantités de trafics passés, transférés vers une pluralité de noeuds de l'étage suivant,
   dans lequel l'unité de calcul comprend une unité qui calcule à l'avance un chemin d'établissement pour un chemin de traverse vers le noeud de destination de transfert excédant une quantité prédéterminée de trafics en conformité avec la mesure obtenue par l'unité de mesure.

3. Noeud selon la revendication 2, dans lequel l'unité de calcul comprend une unité qui calcule à l'avance au moins un chemin d'établissement d'un chemin de traverse vers un noeud de destination de transfert qui excède une quantité prédéterminée de trafics, le nombre de chemins d'établissement calculé étant proportionnel à la quantité de trafics, en conformité avec la mesure obtenue par l'unité de mesure.

4. Noeud selon la revendication 3, dans lequel l'unité d'établissement comprend une unité qui établit des chemins de traverse vers une pluralité d'étages suivants,
   le noeud comprend en outre une unité de transfert qui disperse et transfère une pluralité de paquets formant une série de données en rafale vers la pluralité de chemins de traverse, et
   des numéros de séquence des paquets avant que les paquets ont été dispersés étant joints aux paquets après dispersion.

5. Noeud selon la revendication 3, dans lequel l'unité permettant de calculer un chemin d'établissement comprend une unité qui calcule à l'avance le chemin d'établissement de chemins de traverse vers une pluralité de noeuds dans l'étage suivant ayant différents coûts de lien, et
   l'unité d'établissement comprend une unité qui établit un chemin de traverse sur un chemin d'établissement ayant un coût de lien correspondant à un QoS, une classe de Qualité de Service, des données en rafale arrivant parmi la pluralité de chemins de traverse ayant différents coûts de lien.

6. Noeud selon la revendication 3, dans lequel l'unité de calcul comprend une unité qui calcule à l'avance des chemins d'établissement de chemins de traverse pour une pluralité de noeuds dans l'étage suivant,
   un chemin d'établissement pour le chemin de traverse utilisé dans le transfert des données en rafale est alloué à l'avance, en conformité avec la longueur de rafale des données en rafale arrivant,
   l'unité d'établissement comprend une unité qui établit un chemin de traverse le long du chemin d'établissement alloué à la longueur de rafale parmi la pluralité de chemins d'établissement pour des chemins de traverse, en conformité avec la longueur de rafale des données en rafale arrivant.

7. Noeud selon la revendication 1, dans lequel l'unité d'établissement établit un chemin de traverse vers un noeud de l'étage suivant sur un chemin d'établissement qui correspond à l'adresse IP parmi la pluralité de chemins d'établissement pour des chemins de traverse calculés à l'avance.

8. Noeud selon la revendication 7, comprenant en outre une unité de mesure qui mesure les quantités de trafic passés transférés vers la pluralité de noeuds dans l'étage suivant,
dans lequel l'unité de calcul comprend une unité qui calcule à l'avance un chemin d'établissement pour un chemin de traverse pour un chemin vers un noeud de destination de transfert qui excède une quantité de trafics prédéterminée, en conformité avec la mesure obtenue par l'unité de mesure.

9. Noeud selon la revendication 8, dans lequel l'unité de calcul comprend une unité qui calcule à l'avance au moins un chemin d'établissement d'un chemin de traverse vers un noeud de destination de transfert qui excède une quantité de trafics prédéterminée, le nombre de chemins d'établissement calculé étant proportionnel à la quantité de trafic, en conformité avec la mesure obtenue par l'unité de mesure.

10. Noeud selon la revendication 9, dans lequel
l'unité d'établissement comprend une unité qui établit des chemins de traverse vers une pluralité d'étages suivants, le noeud comprend en outre une unité qui disperse et transfère une pluralité de paquets formant une série de données en rafale parmi la pluralité de chemins de traverse ; et
des numéros de séquence avant dispersion étant joints à chacun des paquets dispersés.

11. Noeud selon la revendication 9, dans lequel l'unité permettant de calculer un chemin d'établissement comprend une unité qui calcule à l'avance le chemin d'établissement de chemins de traverse vers une pluralité de noeuds dans l'étage suivant ayant différents coûts de lien, et
l'unité d'établissement comprend une unité qui établit un chemin de traverse sur un chemin d'établissement ayant un coût de lien correspondant à un QoS, une classe de Qualité de Service, des données en rafale arrivant, parmi la pluralité de chemins de traverse ayant différents coûts de liens.

12. Noeud selon la revendication 9, dans lequel l'unité de calcul comprend une unité qui calcule à l'avance des chemins d'établissement de chemins de traverse pour une pluralité de noeuds dans l'étage suivant,
un chemin d'établissement pour le chemin de traverse utilisé dans le transfert des données en rafale est alloué à l'avance, en conformité avec la longueur de rafale des données en rafale arrivant, et
l'unité d'établissement comprend une unité qui établit effectivement un chemin de traverse le long du chemin d'établissement alloué à la longueur de rafale parmi la pluralité de chemins d'établissement pour des chemins de traverse, en conformité avec la longueur de rafale des données en rafale arrivant.

13. Noeud selon la revendication 1, dans lequel l'unité d'établissement comprend une unité qui établit des chemins de traverse vers une pluralité d'étages suivants,
le noeud comprend en outre une unité qui disperse et transfère une pluralité de paquets formant une série de données en rafale le long de la pluralité de chemins de traverse, et
des numéros de séquence avant dispersion étant joints à chacun des paquets dispersés.

14. Noeud selon la revendication 1, dans lequel l'unité d'établissement comprend une unité qui établit effectivement deux chemins de traverse en tant que chemin d'établissement qui correspond à l'adresse IP du paquet de tête détecté par l'unité de détection parmi la pluralité de chemins d'établissement pour des chemins de traverse calculés à l'avance en conformité avec l'adresse IP, l'un des chemins de traverse étant un chemin de travail et l'autre un chemin de protection.

15. Noeud selon la revendication 14, comprenant en outre une unité qui transfère des données en rafale identiques le long du chemin de travail et du chemin de protection.

16. Noeud selon la revendication 1, comprenant en outre :

une unité qui établit en tant que chemin de travail le chemin de traverse vers un noeud dans l'étage suivant du chemin d'établissement qui correspond à l'adresse IP du paquet de tête détecté par l'unité de détection parmi la pluralité de chemins d'établissement pour des chemins de traverse calculés à l'avance en conformité avec l'adresse IP ;
une unité de sélection qui sélectionne un chemin d'établissement d'un chemin de traverse de protection ayant un chemin différent de celui du chemin de travail parmi la pluralité de chemins d'établissement pour des chemins de traverse calculés à l'avance ; et une unité qui établit effectivement un chemin de traverse de protection sur le chemin d'établissement du chemin de traverse de protection choisi par l'unité de sélection lorsque le chemin de traverse de travail est endommagé.

**17.** Noeud selon la revendication 14, comprenant en outre :

une unité qui transfère des données en rafale le long du chemin de travail lorsqu'il n'y a aucun endommagement détecté du chemin sur lequel le chemin de travail a été établi ; et
une unité qui transfère des données en rafale sur le chemin de protection lorsqu'un endommagement est détecté sur le chemin sur lequel le chemin de travail a été établi.

**18.** Noeud selon la revendication 17, dans lequel des numéros de séquence sont joints aux paquets formant les données en rafale,
le noeud comprenant en outre:

une unité qui notifie à un noeud dans l'étage suivant via le chemin de protection le numéro de séquence final de données en rafale transférées le long du chemin de travail lorsque les données en rafale ont été perdues ;
une unité qui accumule temporairement les données en rafale ;
une unité qui se réfère au numéro de séquence final, notifié par le noeud de l'étage suivant avant transfert de données en rafale accumulées par l'unité d'accumulation temporaire le long du chemin de protection, et juge un paquet, auquel est joint le numéro de séquence suivant après le numéro de séquence final, en tant que paquet de tête des données en rafale à transférer le long du chemin de protection.

**19.** Noeud selon la revendication 16, comprenant en outre :

une unité qui transfère des données en rafale le long du chemin de travail lorsqu'il n'y a aucun endommagement détecté du chemin sur lequel le chemin de travail a été établi ; et
une unité qui transfère des données en rafale sur le chemin de protection lorsqu'un endommagement est détecté sur le chemin sur lequel le chemin de travail a été établi.

**20.** Noeud selon la revendication 16, dans lequel des numéros de séquence sont joints à des paquets formant les données en rafale,
le noeud comprenant en outre :

une unité qui notifie à un noeud dans l'étage suivant via le chemin de protection le numéro de séquence final de données en rafale lorsque les données en rafale transférées le long du chemin de travail ont été perdues ;
une unité qui accumule temporairement les données en rafale ;
une unité qui se réfère au numéro de séquence final, notifié par le noeud de l'étage suivant avant transfert de données en rafale accumulées par l'unité d'accumulation temporaire le long du chemin de protection, et juge un paquet, auquel est joint le numéro de séquence suivant après le numéro de séquence final, en tant que paquet de tête de données en rafale à transférer le long du chemin de protection.

**21.** Noeud selon la revendication 1, comprenant en outre :

une unité qui transmet un paquet optique pour essai le long d'un chemin d'établissement planifié pour le chemin de traverse, avant établissement du chemin de traverse ;
une unité de détermination qui reçoit le paquet optique pour essai et détermine sa qualité optique ;
une unité qui notifie à un noeud dans un étage précédent lorsque l'unité de détermination a déterminé que la qualité de signal s'est détériorée ; et
une unité qui reçoit la notification, et réalise un traitement 3R (remise en forme, synchronisation et amplification) de paquets optiques qui se déplacent ultérieurement le long du chemin.

**22.** Produit de programme, qui est installé dans un dispositif de traitement d'information, et permet au dispositif de traitement d'information de réaliser des fonctions d'établissement et de libération d'un chemin de traverse pour des données en rafale vers un noeud de l'étage suivant, lesdites fonctions comprenant :

le calcul à l'avance de chemins d'établissement pour un chemin de traverse vers une pluralité de noeuds dans l'étage suivant, les chemins d'établissement étant les chemins d'un noeud de bord côté transmission, qui a transmis une demande d'établissement d'un chemin avant transfert desdites données en rafale, vers une pluralité de noeuds de bord côté réception, qui est la destination finale d'une dite demande ;
la détection de l'arrivée d'un paquet de tête desdites données en rafale ; et
l'établissement effectif d'un chemin de traverse le long d'un chemin d'établissement qui correspond à une adresse IP du paquet de tête détecté par la fonction de détection parmi les chemins d'établissement calculés à l'avance.

**23.** Produit de programme selon la revendication 22, dans lequel la fonction d'établissement établit un chemin de traverse le long d'un chemin vers un noeud de l'étage suivant qui correspond à l'adresse IP du paquet de tête, détecté par la fonction de détection, parmi la pluralité de chemins d'établissement coupés calculés à l'avance en conformité avec l'adresse IP.

**24.** Produit de programme selon la revendication 23, dans lequel
la fonction d'établissement effectif établit des chemins de traverse vers une pluralité de noeuds dans l'étage suivant, le produit de programme réalise la fonction de dispersion et transfert d'une pluralité de paquets formant une série de données en rafale le long de la pluralité de chemins de traverse, des numéros de séquence avant dispersion étant joints à chacun des paquets dispersés.

**25.** Produit de programme selon la revendication 23, dans lequel la fonction d'établissement effectif établit deux chemins de traverse en tant que chemin d'établissement qui correspond à l'adresse IP du paquet de tête détecté par la fonction de détection parmi la pluralité de chemins d'établissement pour des chemins de traverse calculés à l'avance en conformité avec l'adresse IP, l'un des chemins de traverse étant un chemin de travail et l'autre un chemin de protection.

**26.** Produit de programme selon la revendication 25, dans lequel le produit de programme réalise la fonction de transfert de données en rafale identiques le long du chemin de travail et du chemin de protection.

**27.** Produit de programme selon la revendication 25, dans lequel le produit de programme réalise en outre les fonctions de :

transfert de données en rafale le long du chemin de travail lorsqu'il n'y a aucun endommagement détecté au chemin sur lequel le chemin de travail a été établi ; et
transfert de données en rafale sur le chemin de protection lorsqu'un endommagement est détecté sur le chemin sur lequel le chemin de travail a été établi.

**28.** Produit de programme selon la revendication 27, dans lequel des numéros de séquence sont joints aux paquets formant les données en rafale,
le produit de programme réalise en outre les fonctions de :

notification à un noeud de bord côté transmission via le chemin de protection du numéro de séquence final de données en rafale transférées le long du chemin de travail lorsque les données en rafale ont été perdues ;
accumulation temporaire de données en rafale ; et
référence au numéro de séquence final, notifié par le noeud de l'étage suivant avant transfert des données en rafale, accumulées par la fonction d'accumulation temporaire, le long du chemin de protection, et jugement d'un paquet, auquel est joint le numéro de séquence suivant après le numéro de séquence final, en tant que paquet de tête de données en rafale à transférer le long du chemin de protection.

**29.** Produit de programme selon la revendication 23, dans lequel le produit de programme réalise en outre les fonctions de :

établissement effectif en tant que chemin de travail du chemin de traverse qui correspond à l'adresse IP du paquet de tête détecté par la fonction de détection parmi la pluralité de chemins d'établissement pour des chemins de traverse calculés à l'avance en conformité avec l'adresse IP ;
sélection d'un chemin d'établissement d'un chemin de traverse de protection ayant un chemin différent de celui du chemin de travail parmi la pluralité de chemins d'établissement pour des chemins coupé calculés à l'avance ; et
établissement effectif d'un chemin de traverse de protection sur le chemin d'établissement coupé de protection sélectionné par la fonction de sélection lorsque le chemin de traverse de travail est endommagé.

**30.** Produit de programme selon la revendication 29, dans lequel le produit de programme réalise en outre les fonctions de :

transfert de données en rafale le long du chemin de travail lorsqu'il n'y a aucun endommagement détecté au chemin sur lequel le chemin de travail a été établi ; et
transfert des données en rafale sur le chemin de protection lorsqu'un endommagement est détecté sur le chemin sur lequel le chemin de travail a été établi.

**31.** Produit de programme selon la revendication 30, dans lequel des numéros de séquence sont joints à des paquets formant les données en rafale,
le produit de programme réalise en outre les fonctions de :

notification à un noeud de bord côté transmission via le chemin de protection du numéro de séquence final de données en rafale transférées le long du chemin de travail lorsque les données en rafale ont été perdues ;
accumulation temporaire des données en rafale ; et
référence au numéro de séquence final, notifié par le noeud de l'étage suivant avant transfert de données en rafale, accumulées par la fonction d'accumulation temporaire, le long du chemin de protection, et jugement d'un paquet, auquel est joint le numéro de séquence suivant après le numéro de séquence final, en tant que paquet de tête de données en rafale à transférer le long du chemin de protection.

**32.** Produit de programme selon la revendication 22, dans lequel le produit de programme réalise en outre la fonction de mesure de quantités de trafics passés transférés vers une pluralité de noeuds de l'étage précédent, et
la fonction de calcul de chemin d'établissement calcule à l'avance un chemin d'établissement pour un chemin de traverse vers le noeud de destination de transfert excédant une quantité de trafics prédéterminée en conformité avec la mesure obtenue par la fonction de mesure.

**33.** Produit de programme selon la revendication 22, dans lequel la fonction de calcul de chemin d'établissement calcule à l'avance au moins un chemin d'établissement d'un chemin de traverse vers un noeud de destination de transfert qui excède une quantité de trafics prédéterminée, le nombre de chemin d'établissement calculé étant proportionnel à la quantité de trafics, en conformité avec la mesure obtenue par la fonction de mesure.

**34.** Produit de programme selon la revendication 22, dans lequel
la fonction de calcul de chemin d'établissement calcule à l'avance le chemin d'établissement de chemins de traverse vers une pluralité de noeuds dans l'étage suivant ayant différents coûts de lien ; et
la fonction d'établissement effectif établit effectivement un chemin de traverse sur un chemin d'établissement ayant un coût de lien correspondant à un QoS, une classe de Qualité de Service, des données en rafale arrivant, parmi la pluralité de chemins de traverse ayant différents coûts de lien.

**35.** Produit de programme selon la revendication 22, dans lequel
la fonction de calcul du chemin d'établissement calcule à l'avance des chemins d'établissement de chemins de traverse pour une pluralité de noeuds dans l'étage suivant,
un chemin d'établissement pour le chemin de traverse utilisé dans le transfert de données en rafale est alloué à l'avance, en conformité avec la longueur de rafale de données en rafale arrivant, et
la fonction d'établissement effectif établit effectivement un chemin de traverse le long du chemin d'établissement alloué à la longueur de rafale parmi la pluralité de chemins d'établissement pour des chemins de traverse, en conformité avec la longueur de rafale des données en rafale arrivant.

**36.** Support d'enregistrement dans lequel est stocké le produit de programme tel que décrit dans la revendication 23, le support d'enregistrement étant lisible par le dispositif de traitement d'information.

**37.** Réseau de communication optique, comprenant :

un noeud de bord côté transmission qui accueille une source de transfert de données ;
un noeud de bord côté réception qui accueille une destination de transfert de données ; et
un noeud de relais qui assure le relais entre le noeud de bord côté transmission et le noeud de bord côté réception, dans lequel les noeuds comportent les unités décrites dans la revendication 2.

DATA
TRANSFER
SOURCE
S
L1
L2
L3
L4
R
DATA
TRANSFER
DESTINATION

FIG. 1

FIG.2
11
TRAFFIC HISTORY COLLECTION SECTION
3
BURST DATA DETECTION SECTION
2
BURST DATA COMPLETION DETECTION SECTION
1
BURST DATA ARRIVAL DETECTION SECTION
10
CUT THROUGH PATH ESTABLISHMENT AND RELEASE SECTION
HEADER INFORMATION READ IN SECTION
4
BURST DATA
FINAL PACKET
SUBSEQUENT PACKETS
LEADING PACKET

#1
#2
#3
#4
#5
S
R
L1
L2
L3
L4

FIG. 3

FIG. 4

| GROUND | TRAFFIC HISTORY | NUMBER OF ESTABLISHMENT PATHS |
|---|---|---|
| #2 | 100Mb/s | 1 |
| #3 | 20Mb/s | 0 |
| #4 | 200Mb/s | 2 |
| #5 | 150Mb/s | 1 |

FIG. 5

⑩
⑨
⑧
⑦
⑥
⑤
④
③
②
①

FIG. 6

TRANSMISSION SIDE EDGE NODE

RECEPTION SIDE EDGE NODE

⑩ ⑨ ⑥ ⑦ ⑧ ③ ④ ⑤ ② ①

S
R
L1
L2
L3
L4
L5
C1
C2

FIG. 7

FIG. 8

BURST DATA ARRIVAL
PERMISSIBLE FLUCTUATION DELAY TIME < D
NO
YES
CUT THROUGH PATH C1
CUT THROUGH PATH C2

FIG. 9

S
R
L1
L2
L3
L4

FIG. 10

BURST DATA ARRIVAL
BURST LENGTH < L
NO
YES
CUT THROUGH PATH C1
CUT THROUGH PATH C2

FIG. 11A

FIG. 11B

BURST DATA
B1
S
L1
L2
L3
L4
C1
C2
BURST DATA
B1
BURST DATA
B1
R

FIG.12

FIG. 13

L4
L3
R
C1
C2
L1
L2
S

FIG.14

R
①
②
③
S
20
BURST BUFFER
Li
Lj
L'i
L'j
④
⑤
⑥
⑦
④

R
①
②
③
④
Li
Lj
L'i
L'j
⑤
⑥
⑦
S
BURST BUFFER
20

FIG. 15

A
OPTICAL TEST PACKET TRANSMISSION SECTION
1B
B
OPTICAL CROSS CONNECT
2B
TRUNK FOR 3R
3B
3R CONTROL SECTION
6B
C
SIGNAL QUALITY DECISION SECTION
4B
DETERIORATED COMMUNICATION SECTION
5B

FIG. 16

FIG. 17

1B
OPTICAL TEST PACKET TRANSMISSION SECTION
4B
SIGNAL QUALITY DECISION SECTION
5B
DETERIORATED COMMUNICATION SECTION
2B
OPTICAL CROSS CONNECT
3B
TRUNK FOR 3R
3R CONTROL SECTION
6B

FIG. 18

2B
OPTICAL CROSS CONNECT
3B-1
TRUNK FOR 3R
3B-2
TRUNK FOR 3R
3R CONTROL SECTION
6B

FIG. 19

#1
#2
#3
A
B
C
D
E
F
G
H
I
J
K
L
M
N

FIG.20
1C
PATH ESTABLISHMENT SECTION
11C
SIGNALING PACKET DETECTION SECTION
12C
ESTABLISHMENT SECTION
13C
PATH ESTABLISHMENT POSSIBILITY DECISION SECTION
14C
DECISION RESULT NOTIFICATION SECTION
PATH
IP PACKET
HEADER INFORMATION

FIG.21

ESTABLISHMENT SUCCESS RATIO CALCULATION SECTION
15C
DECISION RESULT
PATH SELECTION SECTION
16C

FIG.22

ESTABLISHMENT SUCCESS RATIO CALCULATION FLOW

S1 UTILIZE PATH #i

S2 HAS PATH ESTABLISHMENT BEEN SUCCESSFUL?

NO

S4 REDUCE SUCCESS NUMBER BY 1

YES

S3 INCREASE SUCCESS NUMBER BY 1

S5 PREDETERMINED NUMBER OF DATA ITEMS OBTAINED?

NO

S6 i+1→i

YES

S7 CALCULATE (NUMBER OF SUCCESSES / NUMBER OF TIMES UTILIZED) X 100 (%) FOR EACH PATH #i

S8 SELECT PATH FOR WHICH CALCULATION RESULT IS MAXIMUM

FIG. 23

ESTABLISHMENT SUCCESS RATIO CALCULATION FLOW
S11
TRANSMIT TEST PACKETS SIMULTANEOUSLY UPON PATHS #1, #2, AND #3
S12
HAS PATH ESTABLISHMENT BEEN SUCCESSFUL?
NO
S14
REDUCE SUCCESS NUMBER BY 1
YES
S13
INCREASE SUCCESS NUMBER BY 1
S15
NO
PREDETERMINED NUMBER OF DATA ITEMS OBTAINED?
YES
S16
CALCULATE (NUMBER OF SUCCESSES / NUMBER OF TIMES UTILIZED) X 100 (%) FOR EACH PATH #i
S17
SELECT PATH FOR WHICH CALCULATION RESULT IS MAXIMUM

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Flow Routing and its Performance Analysis in Optical IP Networks. *Photonic Network Communications,* 2001, vol. 3 (1-2), 49-62